# EUROPEAN PATENT APPLICATION

(11) **EP 4 811 034 A1**
(43) Date of publication of application: **23.09.2026**
(21) Application number: 26164966.9
(22) Date of filing: 16.03.2026
(51) Int. Cl.: G03B 21/20, F21V 8/00, G02B 6/43, G02B 7/00, G02B 27/30, F16B 11/00

(54) **LIGHT SOURCE APPARATUS AND PROJECTOR**

(30) Priority: 17.03.2025 JP 2025042148
(71) Applicant: Seiko Epson Corporation, Tokyo 160-8801 (JP)
(72) Inventor: ZAKOJI, Makoto, Suwa-shi, 392-8502 (JP)
(74) Representative: Lewis Silkin LLP

(57) **Abstract**

A light source apparatus includes: a light guide having a side surface extending in a first direction, a first end surface oriented in the first direction, and a second end surface oriented in a direction opposite the first direction; an angle converter bonded to the first end surface and configured to convert an angle of light output via the first end surface; a light emitter configured to emit light toward the side surface, a holding member with which the angle converter is in contact in the first direction; and a base at which the light guide and the holding member are disposed, the angle converter including a light passage portion, and a flange protruding from the light passage portion in a direction intersecting with the first direction, the base having a first facing portion, the holding member having contacts with which the flange is in contact along the first direction, and a second facing portion facing the first facing portion in the first direction, and the holding member being fixed to the base with an adhesive that fills a clearance provided between the first facing portion and the second facing portion.

## Description

The present application is based on, and claims priority from JP Application Serial Number 2025-042148, filed March 17, 2025, the disclosure of which is hereby incorporated by reference herein in its entirety.

### BACKGROUND

### 1. Technical Field

The present disclosure relates to a light source apparatus and a projector.

### 2. Related Art

There is a known light source apparatus that converts the wavelength of light incident from a light emitter and outputs the resultant light. As such a light source apparatus, there is a known light generating system including a rod-shaped luminescent body containing a phosphor, a collimator such as a compound parabolic concentrator (CPC) provided at the luminescent body, and an optics interface plate that accommodates at least a portion of the collimator (see WO 2020/078790, for example).

In the light generating system described in WO 2020/078790, first fixation elements and second fixation elements that fix the collimator passing through the optics interface plate are attached to the optics interface plate. The first fixation elements are in contact with the light-incident-side surface of the optics interface plate and a side surface of the collimator. The second fixation elements are in contact with the light-exiting-side surface of the optics interface plate and the light exiting surface of the collimator.

WO 2020/078790 is an example of the related art.

However, when the optics interface plate, which supports the collimator, is fixed to a base that supports the luminescent body, and when the collimator is not appropriately fixed to the optics interface plate due, for example, to variation in adhesion between the luminescent body and the collimator, a load acts on the portion where the luminescent body and the collimator are coupled to each other, so that the luminescent body and the collimator may be separated from each other.

In addition, even when the collimator is fixed to the optics interface plate fixed to the base, but when the adhesion variation described above or the like occurs, stress is induced to separate one end of the light-exiting-side surface of the collimator from the optics interface plate. When such stress is induced, a load acts on the portion where the luminescent body and the collimator are coupled to each other, so that the luminescent body and the collimator may be separated from each other.

In view of the problem described above, a configuration capable of holding a light guide and an angle converter such as CPC in a stable manner has been demanded.

### SUMMARY

A light source apparatus according to a first aspect of the present disclosure includes a light guide having a side surface extending in a first direction, a first end surface intersecting with the side surface and oriented in the first direction, and a second end surface intersecting with the side surface and oriented in a direction opposite the first direction; an angle converter bonded to the first end surface and configured to convert an angle of light output via the first end surface; a light emitter configured to emit light toward the side surface, a holding member with which the angle converter is in contact in the first direction; and a base at which the light guide and the holding member are disposed, in which the angle converter includes a light passage portion through which light incident from the light guide passes, and a flange which protrudes from the light passage portion in a direction intersecting with the first direction and through which the light incident from the light guide on the angle converter does not pass, the base has a first facing portion, the holding member has contacts with which the flange is in contact along the first direction, and a second facing portion facing the first facing portion in the first direction, and the holding member is fixed to the base with an adhesive that fills a clearance provided between the first facing portion and the second facing portion.

A projector according to a second aspect of the present disclosure includes a light source apparatus according to the first aspect described above; a light modulator configured to modulate light output from the light source apparatus; and a projection optical apparatus configured to project the light modulated by the light modulator.

### BRIEF DESCRIPTION OF THE DRAWINGS

FIG. 1 is a diagrammatic view showing the configuration of a projector according to a first embodiment.
FIG. 2 is a perspective view showing a light source apparatus according to the first embodiment.
FIG. 3 is a perspective view showing the light source apparatus according to the first embodiment.
FIG. 4 is a side view showing a fluorescence outputting apparatus in the first embodiment.
FIG. 5 is a perspective view showing the fluorescence outputting apparatus in the first embodiment.
FIG. 6 is a plan view showing a light outputting member in the first embodiment.
FIG. 7 shows an angle converter in the first embodiment.
FIG. 8 is a perspective view showing the angle converter in the first embodiment.
FIG. 9 is a cross-sectional view showing a fluorescence outputting apparatus in the first embodiment.
FIG. 10 is an exploded perspective view showing the light source apparatus according to the first embodiment.
FIG. 11 is an exploded perspective view showing the light source apparatus according to the first embodiment.
FIG. 12 is an exploded perspective view showing the light source apparatus according to the first embodiment.
FIG. 13 is a perspective view showing the angle converter and a holding member in the first embodiment.
FIG. 14 is a perspective view showing the angle converter and the holding member in the first embodiment.
FIG. 15 is a cross-sectional view showing the light source apparatus according to the first embodiment.
FIG. 16 shows a holding member provided in a light source apparatus of a projector according to a second embodiment.

### DESCRIPTION OF EMBODIMENTS

### First embodiment

A first embodiment of the present disclosure will be described below with reference to the drawings.

### Schematic configuration of projector

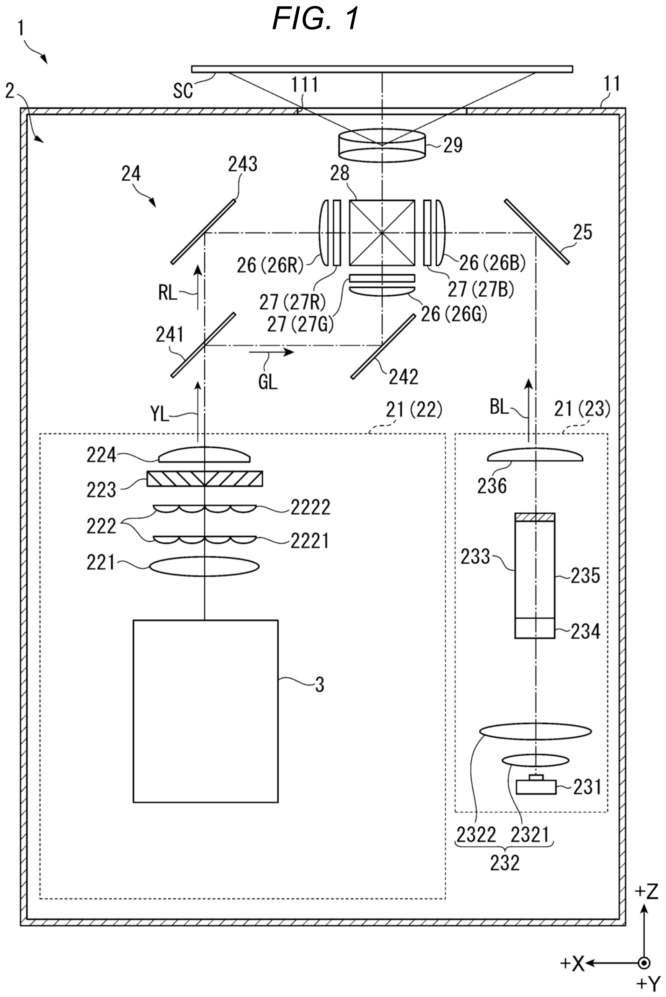

FIG. 1 is a diagrammatic view showing the configuration of a projector 1 according to the present embodiment.

The projector 1 according to the present embodiment is a display apparatus that modulates the light output from a light source to form image light, enlarges the formed image light, and projects the enlarged image light onto a projection receiving surface SC such as a screen. The projector 1 includes an exterior enclosure 11, which constitutes the exterior of the projector 1, and an image projecting apparatus 2 accommodated in the exterior enclosure 11, as shown in FIG. 1. In addition to the above, the projector 1 includes, although not shown, a control apparatus that controls the operation of the projector 1, a cooling apparatus that cools cooling targets, and a power supply apparatus that supplies electronic parts that constitute the projector 1 with electric power.

### Configuration of image projection apparatus

The image projecting apparatus 2 projects image light according to image information under the control of the control apparatus described above. This image projecting apparatus 2 includes an illuminator 21, a color separation system 24, a reflection mirror 25, parallelizing lenses 26, light modulators 27, a light combiner 28, and a projection optical apparatus 29.

The illuminator 21 includes a first illuminator 22, which outputs fluorescence YL containing green light GL and red light RL, and a second illuminator 23, which outputs blue light BL.

### Configuration of first illuminator

The first illuminator 22 irradiates the color separation system 24 with the fluorescence YL. The first illuminator 22 includes a light source apparatus 3, a parallelizing system 221, an optical integration system 222, a polarization converter 223, and a superimposing system 224.

The light source apparatus 3 outputs the fluorescence YL. The configuration of the light source apparatus 3 will be described later in detail.

The parallelizing system 221 parallelizes the fluorescence YL output from the light source apparatus 3.

The optical integration system 222 homogenizes the illuminance distribution of the fluorescence YL incident from the light source apparatus 3 via the parallelizing system 221. In the present embodiment, the optical integration system 222 is configured with a first lens array 2221 and a second lens array 2222. Although not shown in detail, the first lens array 2221 includes multiple first lenses arranged in a matrix, and the second lens array 2222 includes multiple second lenses corresponding to the multiple first lenses. The first lens array 2221 divides the fluorescence YL incident from the parallelizing system 221 into multiple sub-luminous fluxes, each of which passes through the corresponding one of the multiple second lenses. Note that the optical integration system 222 may be configured with a rod integrator.

The multiple sub-luminous fluxes output from the second lens array 2222 enters the polarization converter 223. That is, the fluorescence YL enters the polarization converter 223. The polarization converter 223 converts the incident fluorescence YL into one kind of linearly polarized light and outputs the linearly polarized fluorescence YL.

Out of the multiple sub-luminous fluxes incident via the polarization converter 223, the superimposing system 224 causes the sub-luminous fluxes that constitute the green light GL to be superimposed on a modulation region of a green light modulator 27G, and causes the sub-luminous fluxes that constitute the red light RL to be superimposed on a modulation region of a red light modulator 27R. Note that the fluorescence YL output from the superimposing system 224 enters the color separation system 24.

### Configuration of second illuminator

The second illuminator 23 irradiates the reflection mirror 25 with the blue light BL. The second illuminator 23 includes a blue light source 231, a light collector 232, a homogenizer 233, and a relay lens 236.

The blue light source 231 includes at least one light emitter that emits the blue light BL.

The light collector 232 collects the blue light BL output from the blue light source 231 into a spot at the homogenizer 233. The light collector 232 includes, for example, multiple lenses 2321 and 2322.

The homogenizer 233 homogenizes the illuminance distribution of the blue light BL incident from the light collector 232. In the present embodiment, the homogenizer 233 includes a diffuser plate 234 and a rod integrator 235.

The relay lens 236 relays the blue light BL incident from the homogenizer 233 to the reflection mirror 25.

### Configurations of color separation system and reflection mirrors

The color separation system 24 separates the fluorescence YL incident from the first illuminator 22 into the green light GL and the red light RL, guides the green light GL to the green light modulator 27G, and guides the red light RL to the red light modulator 27R. The color separation system 24 includes a dichroic mirror 241 and reflection mirrors 242 and 243.

The dichroic mirror 241 separates the fluorescence YL incident from the first illuminator 22 into the green light GL and the red light RL.

The reflection mirror 242 reflects the green light GL reflected off the dichroic mirror 241 toward the green light modulator 27G.

The reflection mirror 243 reflects the red light RL having passed through the dichroic mirror 241 toward the red light modulator 27R.

The reflection mirror 25 reflects the blue light BL incident from the second illuminator 23 toward a blue light modulator 27B.

### Configurations of parallelizing lenses

The parallelizing lenses 26 are each a field lens that parallelizes incident light. The parallelizing lenses 26 include a blue parallelizing lens 26B, a green parallelizing lens 26G, and a red parallelizing lens 26R.

The blue parallelizing lens 26B is provided between the reflection mirror 25 and the blue light modulator 27B in the optical path of the blue light BL. The blue parallelizing lens 26B parallelizes the blue light BL to be incident on the blue light modulator 27B.

The green parallelizing lens 26G is provided between the reflection mirror 242 and the green light modulator 27G in the optical path of the green light GL. The green parallelizing lens 26G parallelizes the green light GL to be incident on the green light modulator 27G.

The red parallelizing lens 26R is provided between the reflection mirror 243 and the red light modulator 27R in the optical path of the red light RL. The red parallelizing lens 26R parallelizes the red light RL to be incident on the red light modulator 27R.

### Configuration of light modulators

The light modulators 27 are each an image forming apparatus that modulates incident light in accordance with image information. The light modulators 27 include the blue light modulator 27B, which modulates the blue light BL, the green light modulator 27G, which modulates the green light GL, and the red light modulator 27R, which modulates the red light RL.

In the present embodiment, the light modulators 27B, 27G, and 27R are each configured with a transmissive liquid crystal panel and a pair of polarizer plates that sandwich the liquid crystal panel. That is, the light modulators 27 are each a transmissive liquid crystal light valve.

### Light combiner and projection optical apparatus

The multiple types of color light BL, GL, and RL modulated by the light modulators 27R, 27G, and 27B enter the light combiner 28. The light combiner 28 combines the multiple types of incident color light BL, GL, and RL with one another to generate image light to be projected by the projection optical apparatus 29. In the present embodiment, the light combiner 28 is configured with a cross dichroic prism, and may instead be configured with multiple dichroic mirrors.

The projection optical apparatus 29 projects the combined image light from the light combiner 28 onto the projection receiving surface SC via a projection port 111 of the exterior enclosure 11. That is, the projection optical apparatus 29 projects the light modulated by the light modulators 27. The projection optical apparatus 29 can, for example, be a lens assembly including multiple lenses and a tubular lens barrel that accommodates the multiple lenses.

### Configuration of light source apparatus

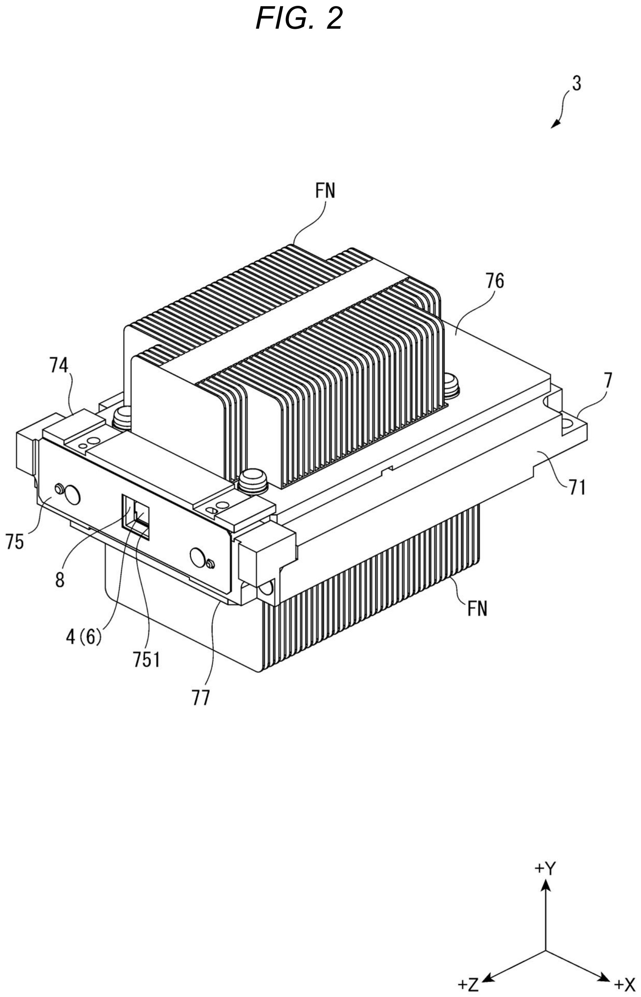

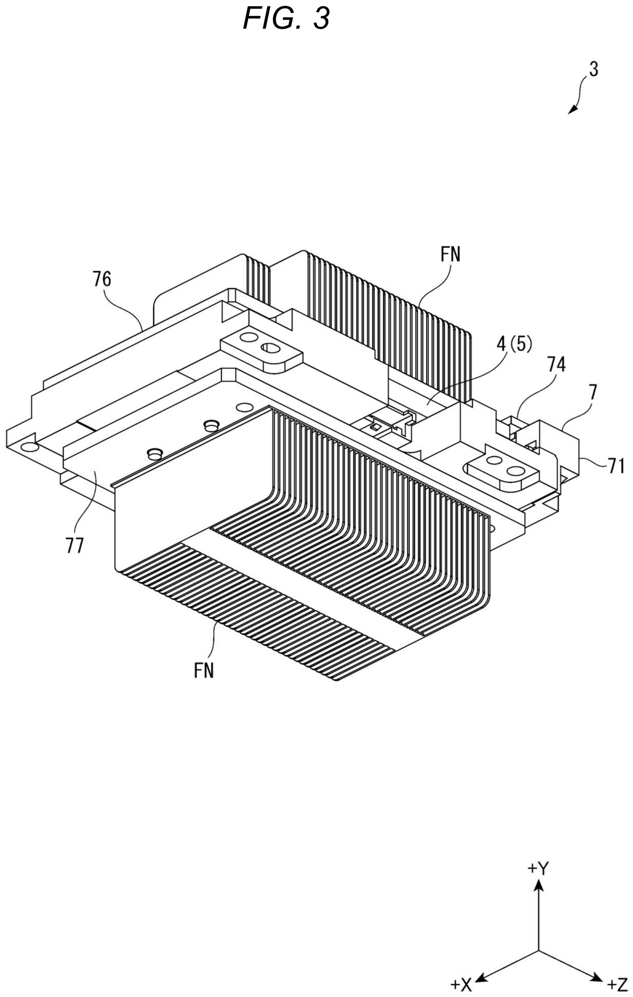

FIG. 2 is a perspective view showing the light source apparatus 3 viewed from the side via which the fluorescence YL exits, and FIG. 3 is a perspective view showing the light source apparatus 3 viewed from the side opposite the side via which the fluorescence YL exits.

The light source apparatus 3 includes a fluorescence outputting apparatus 4 and a housing 7, which accommodates the fluorescence outputting apparatus 4, as shown in FIG. 3. The light source apparatus 3 further includes a holding member 8, which is shown in none of FIGS. 2 and 3.

In the following description, three directions perpendicular to each other are defined as a +X direction, a +Y direction, and a +Z direction. It is assumed in the present embodiment that the +Z direction is the direction in which the light source apparatus 3 outputs the fluorescence YL, and that the +Y direction is the direction in which a light source unit 5 is located from a base 71, which will be described later, in the housing 7. It is assumed that the +X direction is the rightward direction in the view so viewed in the +Z direction that the +Y direction is the upward direction. Although not shown, the direction opposite the +X direction is referred to as a -X direction, the direction opposite the +Y direction is referred to as a -Y direction, and the direction opposite the +Z direction is referred to as a -Z direction.

### Configuration of fluorescence outputting apparatus

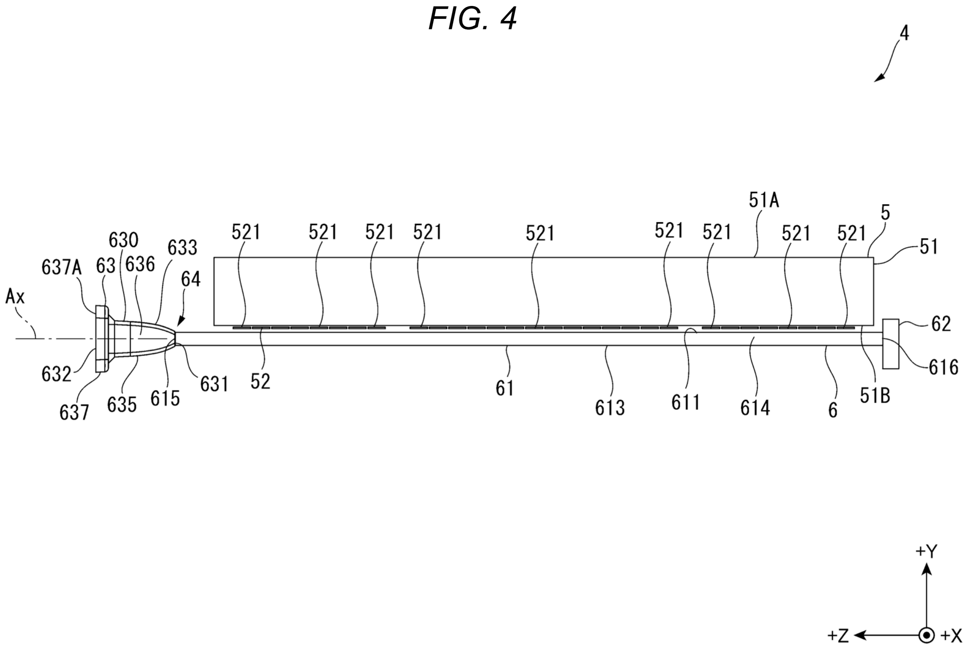

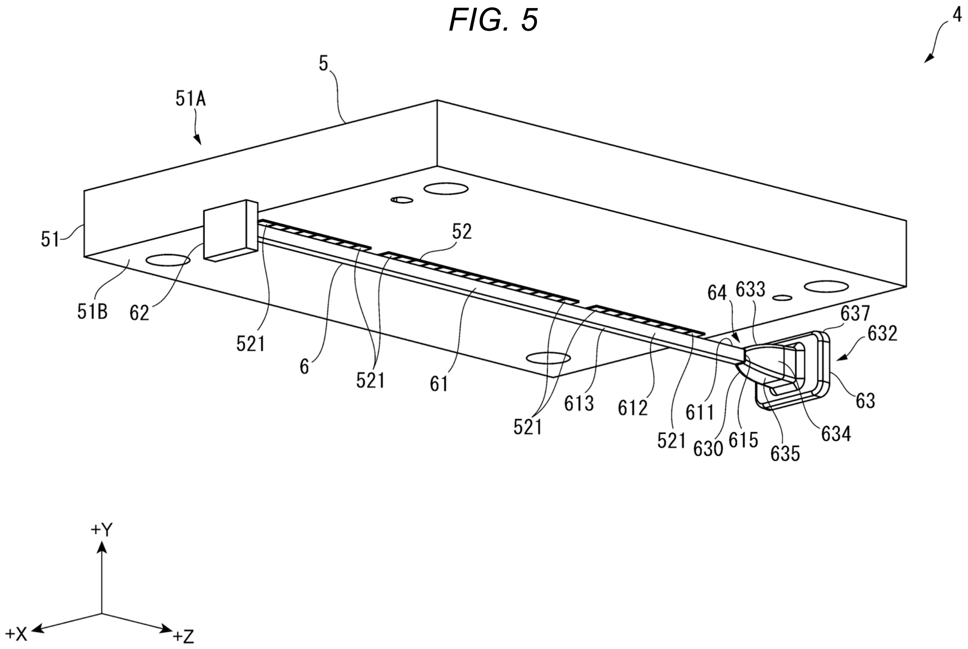

FIG. 4 is a side view showing the fluorescence outputting apparatus 4 viewed in the +X direction. FIG. 5 is a perspective view of the fluorescence outputting apparatus 4 viewed in the -Z direction.

The fluorescence outputting apparatus 4 is accommodated in the housing 7 and outputs the fluorescence YL. The fluorescence outputting apparatus 4 includes the light source unit 5 and a light outputting member 6, as shown in FIGS. 4 and 5.

### Configuration of light source unit

The light source unit 5 outputs light to a light guide 61, which will be described later, of the light outputting member 6. In the present embodiment, the light source unit 5 outputs excitation light that excites a phosphor contained in the light guide 61 to the light guide 61. The light source unit 5 is disposed at a position shifted from the light guide 61 in the +Y direction. The light source unit 5 includes a substrate 51, a light source 52 mounted on the substrate 51, and a connector 53.

The substrate 51 is disposed at the side opposite the base 71, which will be described later, of the housing 7 with the light guide 61 interposed therebetween to cover the light guide 61, and is fixed to the base 71. The substrate 51 has a first surface 51A oriented in the +Y direction, and a second surface 51B oriented in the -Y direction.

When the substrate 51 is fixed to the base 71, the first surface 51A is in contact with a first heat dissipating member 76, which will be described later, in a heat transferable manner.

The second surface 51B is a surface opposite the first surface 51A. The light source 52 and the connector 53 are mounted on the second surface 51B. That is, the second surface 51B supports the light source 52 and the connector 53.

The light source 52 outputs the excitation light in the -Y direction. The light source 52 is configured with at least one light emitter 521 arranged along the +Z direction, and the light emitting surface of each of the light emitters 521 faces a first side surface 611, which will be described later, of the light guide 61. That is, the multiple light emitters 521 output the excitation light to be incident on the first side surface 611. The excitation light output by the light emitters 521 is, for example, light having a first wavelength band in a range between 400 nm and 480 nm, and the peak wavelength of the excitation light is, for example, 445 nm. In the present embodiment, the light emitters 521 are each a light emitting diode (LED), and may instead be a laser diode (LD), or any other light emitter.

The connector 53 is provided at the second surface 51B at a position shifted from the light source 52 in the -X direction. Electric power that turns on the light emitters 521 is externally supplied to the connector 53.

### Configuration of light outputting member

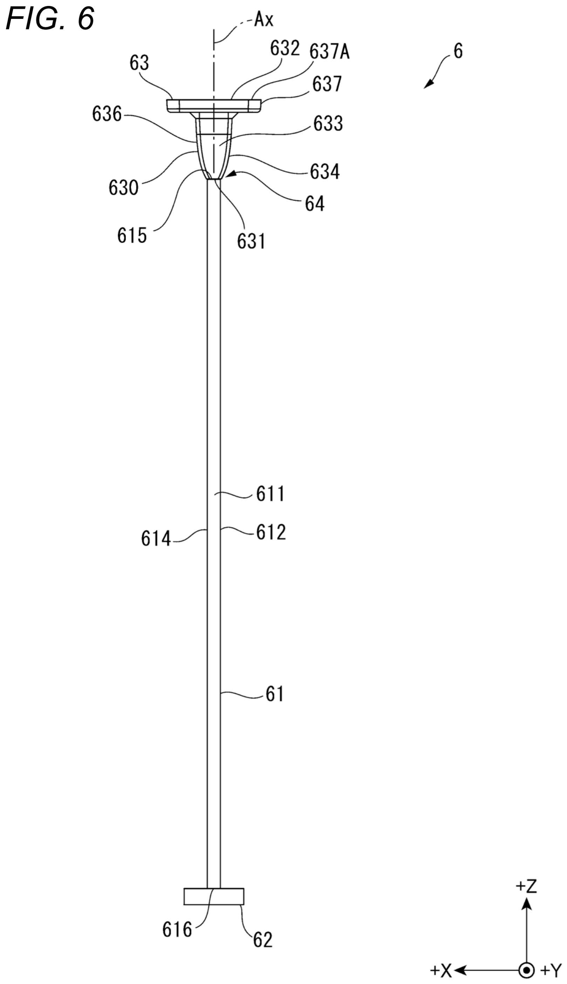

FIG. 6 is a plan view showing the light outputting member 6 viewed in the +Y direction.

The light outputting member 6 has the function of guiding light based on the light output from the light source unit 5 to the space outside the light source apparatus 3. In the present embodiment, the light outputting member 6 converts the wavelength of the excitation light output from the light source unit 5 to generate the fluorescence YL, and guides the fluorescence YL to the space outside the light source apparatus 3. That is, the light outputting member 6 is a wavelength converting member and is also a light transmitting member.

The light outputting member 6 includes the light guide 61, a reflection member 62, an angle converter 63, and an adhesive 64, as shown in FIGS. 5 to 7.

### Configuration of light guide

The excitation light is incident on the light guide 61 along the -Y direction from the light emitters 521. The light guide 61 outputs light based on the incident excitation light in the +Z direction, which intersects with the -Y direction. In the present embodiment, the light guide 61 contains a phosphor excited by the incident excitation light. The light guide 61 generates the fluorescence YL having wavelengths different from the wavelength of the incident excitation light and outputs the fluorescence YL in the +Z direction. That is, the light guide 61 is a wavelength converter that converts the wavelength of the incident excitation light and outputs the fluorescence YL. Note that the phosphor contained in the light guide 61 may, for example, be a YAG-based phosphor containing yttrium, aluminum, and garnet.

The light guide 61 has the first side surface 611, a second side surface 612, a third side surface 613, a fourth side surface 614, a first end surface 615, and a second end surface 616, and is formed in a substantially quadrangular columnar shape elongated along the +Z direction, as shown in FIGS. 4 to 6. Note that the area of the cross section of the light guide 61 perpendicular to the +Z direction is substantially fixed along the +Z direction, and is greater than or equal to 0.25 mm² but smaller than or equal to 4.00 mm².

The side surfaces 611 to 614 extend along the +Z direction. The first side surface 611 is an outer surface oriented in the +Y direction, as shown in FIGS. 4 to 6.

The first side surface 611 has a light incident region that faces the light source 52 and receives the excitation light from the light source 52, as shown in FIGS. 5 and 6.

The second side surface 612 is an outer surface oriented in the -X direction as shown in FIGS. 5 and 6, the third side surface 613 is an outer surface oriented in the -Y direction as shown in FIG. 5, and the fourth side surface 614 is an outer surface oriented in the +X direction as shown in FIGS. 4 to 6.

The first end surface 615 and the second end surface 616 are surfaces located on opposite sides along the +Z direction, the first end surface 615 being an outer surface of the light guide 61 that is the surface oriented in the +Z direction, and the second end surface 616 being an outer surface of the light guide 61 that is the surface oriented in the -Z direction, as shown in FIG. 6. The first end surface 615 and the second end surface 616 each intersect with each of the side surfaces 611 to 614. The first end surface 615 and the second end surface 616 each have a square shape.

The reflection member 62 is pressed and urged against the second end surface 616 by a first urging member 72, which will be described later. The light output from the light guide 61 via the second end surface 616 in the -Z direction is reflected off the reflection member 62 in the +Z direction and enters the light guide 61 via the second end surface 616.

The first end surface 615 is a light exiting surface via which the fluorescence YL generated in the light guide 61 exits in the +Z direction. The angle converter 63 is bonded to the first end surface 615 with the adhesive 64.

### Configuration of angle converter

The angle converter 63 is provided at the first end surface 615. The angle converter 63 is a compound parabolic concentrator (CPC), and is made of a light transmissive material, such as borosilicate glass or cycloolefin resin, and formed in a truncated substantially rectangular pyramidal shape. The angle converter 63 includes a light passage portion 630 and a flange 637, as shown in FIGS. 4 to 6.

The light passage portion 630 is a portion of the angle converter 63 that is the portion through which the fluorescence YL incident from the light guide 61 passes. The light passage portion 630 has a light incident end surface 631, a light exiting end surface 632, and side surfaces 633, 634, 635, and 636.

The light incident end surface 631 is disposed so as to face the first end surface 615, and bonded to the first end surface 615 with the adhesive 64, as shown in FIGS. 4 and 6. That is, the light incident end surface 631 is a surface of the angle converter 63 that is the surface oriented in the -Z direction and facing the first end surface 615. The fluorescence YL output via the first end surface 615 is incident on the light incident end surface 631.

The light exiting end surface 632 is the surface opposite the light incident end surface 631 and oriented in the +Z direction. The fluorescence YL having entered the angle converter 63 via the light incident end surface 631 exits via the light exiting end surface 632.

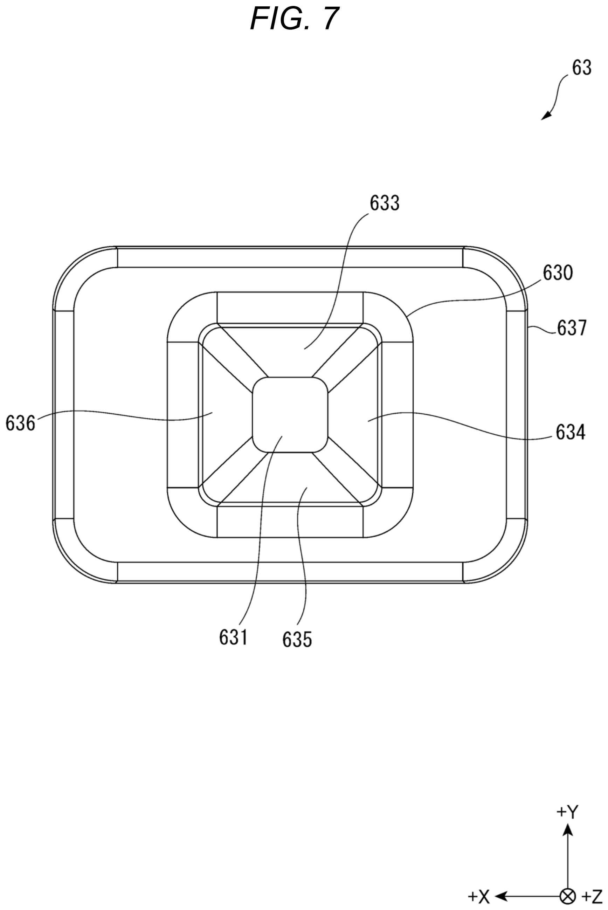

FIG. 7 is a front view showing the angle converter 63 viewed in the -Z direction.

The four side surfaces 633 to 636 are outer surfaces that intersect with each of the light incident end surface 631 and the light exiting end surface 632 and extend along the circumferential direction around an optical axis Ax of the angle converter 63. The side surfaces 633 to 636 are each a parabolic curved surface.

The first side surface 633 is oriented in the +Y direction, and the third side surface 635 is oriented in the -Y direction, as shown in FIG. 7. The second side surface 634 is oriented in the -X direction, and the fourth side surface 636 is oriented in the +X direction. The inner sides of the side surfaces 633 to 636 function as inner reflection surfaces that reflect the fluorescence YL having entered the angle converter 63 via the light incident end surface 631 toward the light exiting end surface 632.

A cross-sectional area of the light passage portion 630 that is the area perpendicular to the optical axis Ax of the angle converter 63, that is, a cross-sectional area of the light passage portion 630 that is the area perpendicular to the +Z direction increases as the angle converter 63 extends from the light incident end surface 631 toward the light exiting end surface 632, and the area of the light exiting end surface 632 is greater than the area of the light incident end surface 631, as shown in FIGS. 4 and 6.

The dimension of each of the side surfaces 633 and 635 along the +X direction increases as the side surface extends from the light incident end surface 631 toward the light exiting end surface 632, as shown in FIG. 6.

The dimension of each of the side surfaces 634 and 636 along the +Y direction increases as the side surface extends from the light incident end surface 631 toward the light exiting end surface 632, as shown in FIG. 4.

Note that the +X and +Y directions are directions perpendicular to the optical axis Ax of the angle converter 63 along the +Z direction. The optical axis Ax of the angle converter 63 is an axis passing through the center of each of the light incident end surface 631 and the light exiting end surface 632 and being parallel to the +Z direction. That is, the light incident end surface 631 and the light exiting end surface 632 are perpendicular to the optical axis Ax. The optical axis Ax coincides with the optical axis of the first illuminator 22.

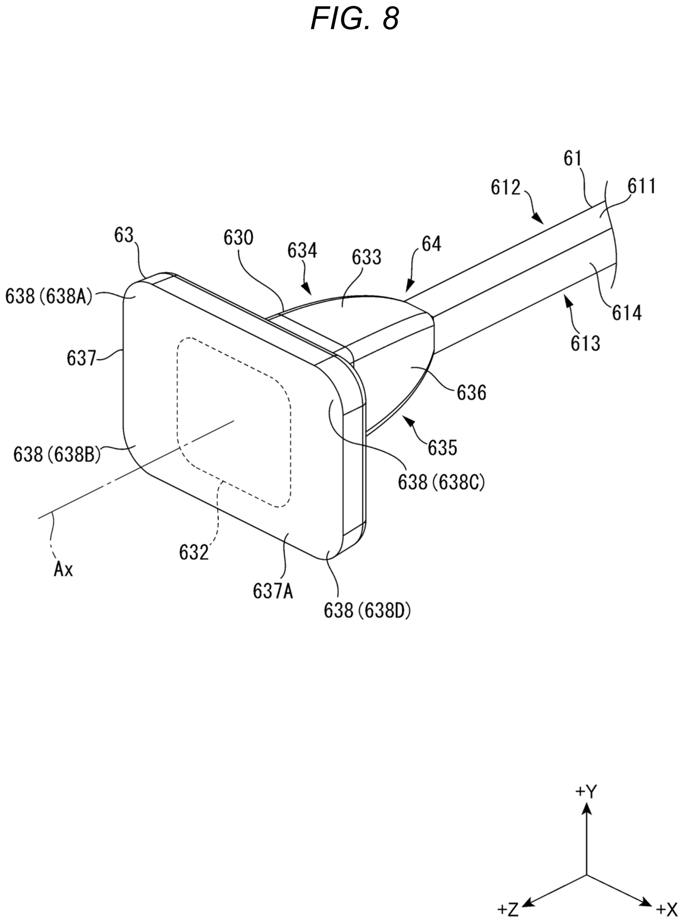

FIG. 8 is a rear view showing the angle converter 63 viewed in the +Z direction.

The flange 637 is a portion protruding from the light passage portion 630 radially outward with respect to the optical axis Ax. The flange 637 is provided at the light-exiting-side end portion of the light passage portion 630, and a +Z-side surface 637A of the flange 637 coincides with the light exiting end surface 632. That is, the flange 637 is provided in a region of the angle converter 63 that is the region through which the fluorescence YL incident via the light incident end surface 631 and exiting via the light exiting end surface 632 does not pass. Specifically, the flange 637 is a portion protruding from the light passage portion 630 in the +X and +Y directions, which intersect with the optical axis Ax along the +Z direction, and is a portion through which the fluorescence YL incident from the light guide 61 and entering the angle converter 63 does not pass, as shown in FIGS. 4 to 8.

The surface 637A of the flange 637 is provided with contact regions 638, which come into contact with the holding member 8, which will be described later. In other words, the flange 637 has the contact regions 638 located at the surface 637A.

The contact regions 638 include contact regions 638A, 638B, 638C, and 638D disposed at four corners of the surface 637A. The contact regions 638 include the contact region 638A provided at a corner of the surface 637A that is the corner oriented in the -X direction and the +Y direction, the contact region 638B provided at a corner of the surface 637A that is the corner oriented in the -X direction and the -Y direction, the contact region 638C provided at a corner of the surface 637A that is the corner oriented in the +X direction and the +Y direction, and the contact region 638D provided at a corner of the surface 637A that is the corner oriented in the +X direction and the -Y direction.

The contact regions 638A and 638B and the contact regions 638C and 638D are provided at positions where the two sets of the contact regions sandwich the optical axis Ax in the +X direction. The contact regions 638A and 638C and the contact regions 638B and 638D are provided at positions where the two sets of the contact regions sandwich the optical axis Ax in the +Y direction.

At least three contact regions 638 of the contact regions 638A, 638B, 638C, and 638D come into contact with contacts 85 of the holding member 8, which will be described later.

### Configuration of adhesive

The adhesive 64 bonds the first end surface 615 of the light guide 61 and the light incident end surface 631 of the angle converter 63 to each other, as shown in FIGS. 4 and 6. In the present embodiment, the adhesive 64 is provided across the region between the first end surface 615 and the light incident end surface 631.

Out of the fluorescence YL incident from the interior of the light guide 61 on the inner side of the first end surface 615, the fluorescence YL incident at angles greater than or equal to the critical angle is totally reflected off the inner side of the first end surface 615, and cannot therefore enter the angle converter 63. In a region where an air gap is provided between the first end surface 615 and the light incident end surface 631, the critical angle is small, so that the amount of the fluorescence YL passing through the first end surface 615 and entering the angle converter 63 decreases.

In contrast, when the adhesive 64 is provided across the region between the first end surface 615 and the light incident end surface 631 and there is therefore no air gap between the first end surface 615 and the light incident end surface 631, the aforementioned decrease in the critical angle can be suppressed, so that the amount of the fluorescence YL that cannot enter the angle converter 63 can be reduced. In other words, when there is no air gap between the first end surface 615 and the light incident end surface 631, the fluorescence YL is readily allowed to be incident on the light incident end surface 631 via the first end surface 615.

In view of the above, it is desirable that the difference in refractive index between the light guide 61 and the adhesive 64, and the difference in refractive index between the adhesive 64 and the angle converter 63 are as small as possible.

In the present embodiment, the light guide 61 is made of a material containing a YAG-based phosphor, and the angle converter 63 is made of a light transmissive material such as borosilicate glass. The refractive index of the light guide 61 is about 1.8, and the refractive index of the angle converter 63 is greater than or equal to 1.50 but smaller than or equal to 1.55. It is therefore difficult to match the refractive index of the light guide 61 with the refractive index of the angle converter 63. It is therefore preferable that the difference in refractive index between the angle converter 63 and the adhesive 64 is as small as possible.

When the angle converter 63 is made of borosilicate glass, the refractive index of the angle converter 63 is about 1.5. In this case, the adhesive 64 may be made of a phenyl-based silicone resin adhesive, and an additive may be added to the adhesive 64 as necessary to adjust the refractive index of the adhesive 64 as appropriate, so that the adhesive 64, which bonds the light guide 61 and the angle converter 63 to each other, can have a refractive index of about 1.5. The difference in refractive index between the angle converter 63 and the adhesive 64 can thus be reduced, so that the fluorescence YL is readily allowed to enter the angle converter 63 from the light guide 61.

Note that since the fluorescence YL output via the first end surface 615 needs to be incident on the light incident end surface 631, the adhesive 64 is light-transmissive adhesive. In addition, among phenyl-based silicone resin adhesives, it is preferable that the adhesive 64 is a thermosetting or ultraviolet-curable phenyl-based silicone resin adhesive.

### Light guide and angle converter outputting fluorescence

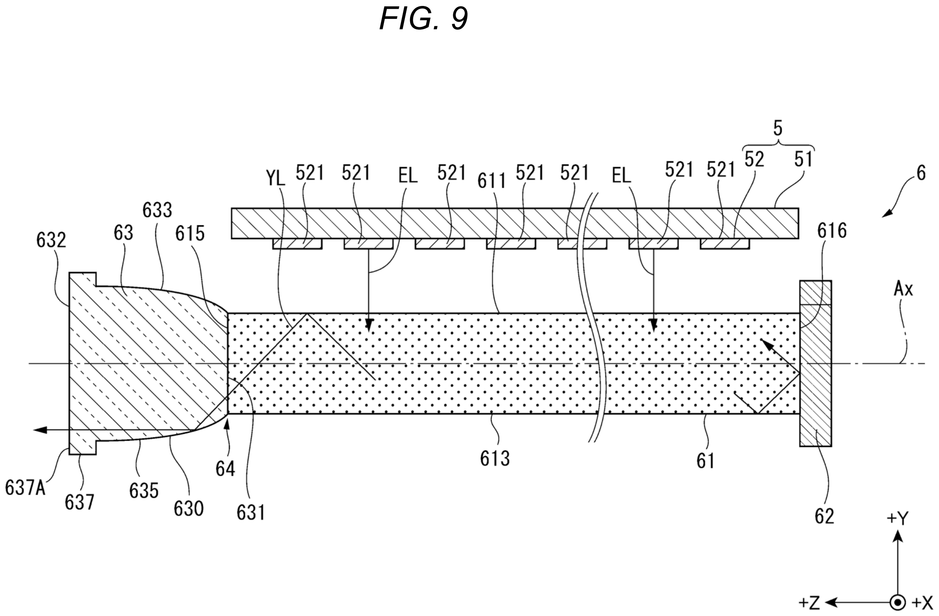

FIG. 9 shows the cross section of the fluorescence outputting apparatus 4 taken along the YZ plane, and shows the optical paths of the fluorescence YL output from the light guide 61 and the angle converter 63.

When excitation light EL output from the light source 52 enters via the first side surface 611 of the light guide 61, which is a wavelength converter, and excites the phosphor contained in the light guide 61, the fluorescence YL is diffusively emitted from any light emitting point, as shown in FIG. 9. The fluorescence YL travels omnidirectionally from aby light emitting point, and the fluorescence YL directed toward the side surfaces 611 to 614 of the light guide 61 travels inside the light guide 61 toward the first end surface 615 or the second end surface 616 while repeatedly totally reflected at multiple locations on the inner sides of the side surfaces 611 to 614.

The fluorescence YL having traveled inside the light guide 61 exits via the first end surface 615. The fluorescence YL traveling toward the first end surface 615 exits via the first end surface 615, and enters the angle converter 63 via the adhesive 64. The fluorescence YL traveling toward the second end surface 616 is reflected off the reflection member 62, is then incident on the second end surface 616, and travels toward the first end surface 615.

Note that out of the excitation light EL having entered the light guide 61, part of the excitation light EL that is the part not having been used for the excitation of the phosphor is reflected off members around the light guide 61 including the light emitters 521 of the light source 52, or the reflection member 62 provided at the second end surface 616. The part of the excitation light EL is therefore confined in the light guide 61 and reused. Note that the members around the light guide 61 include the inner surface of a first accommodating portion 711 of the base 71, which will be described later.

While the fluorescence YL having entered the angle converter 63 travels inside the angle converter 63, and whenever the fluorescence YL is totally reflected off the inner sides of the side surfaces 633 to 636, the traveling direction of the fluorescence YL changes so as to approach the direction parallel to the optical axis Ax of the angle converter 63. The angle converter 63 thus changes the exiting angle distribution of the fluorescence YL that exits via the first end surface 615 of the light guide 61. Specifically, the angle converter 63 makes the maximum exiting angle of the fluorescence YL at the light exiting end surface 632 smaller than the maximum incident angle of the fluorescence YL at the light incident end surface 631.

In general, the etendue of light that is defined by the product of the area of a light exiting region and the solid angle (maximum exiting angle) of the light is preserved, so that the etendue of the fluorescence YL is preserved before and after the fluorescence Y passes through the angle converter 63. The area of the light exiting end surface 632 is greater than the area of the light incident end surface 631, as described above. Therefore, to preserve the etendue, the angle converter 63 can make the maximum exiting angle of the fluorescence YL at the light exiting end surface 632 smaller than the maximum incident angle of the fluorescence YL incident on the light incident end surface 631.

### Configuration of housing

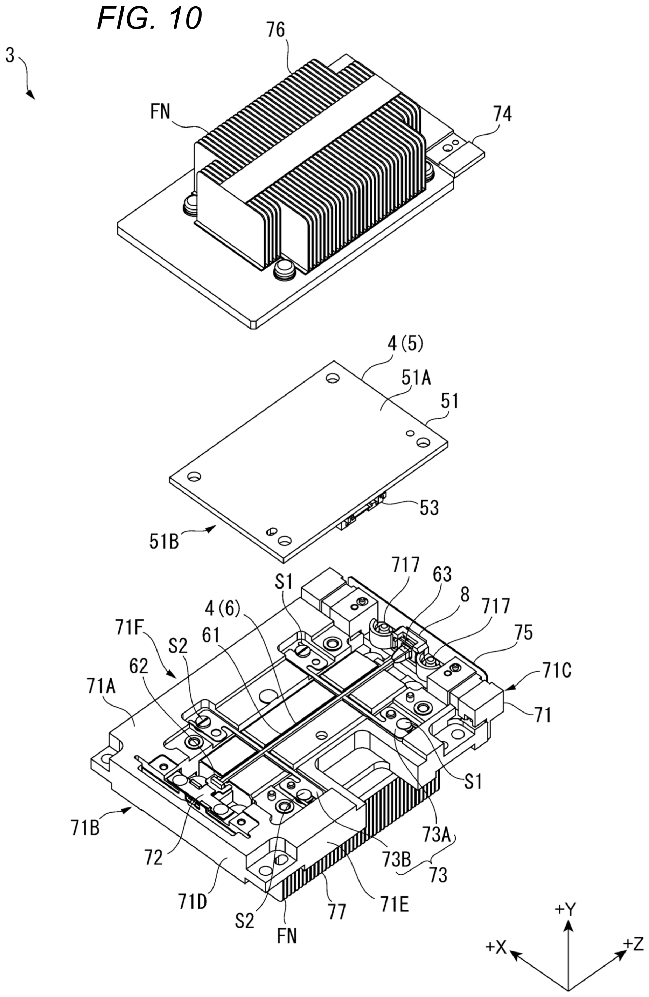

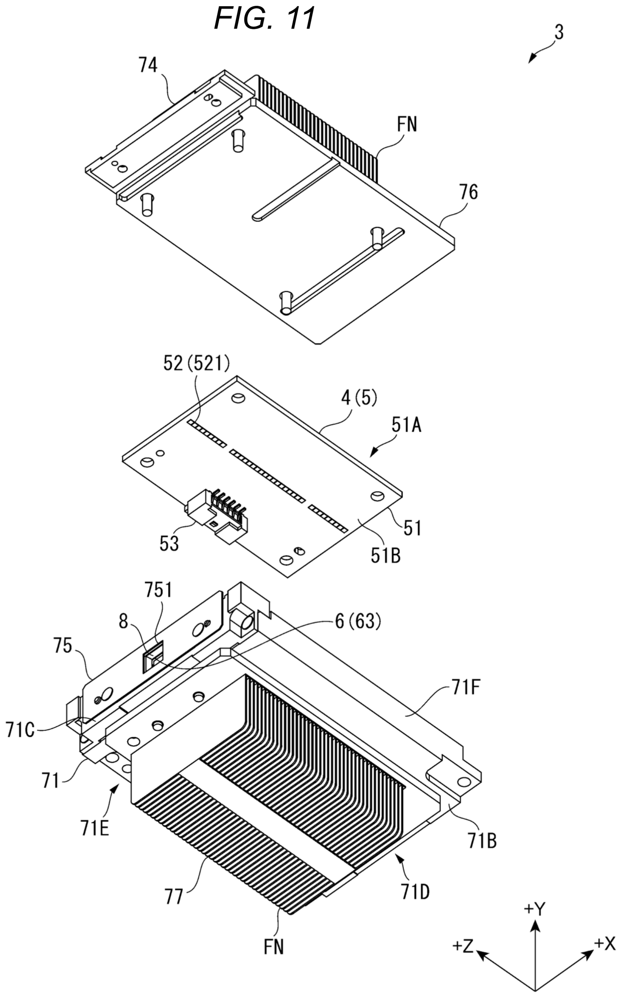

FIG. 10 is an exploded perspective view showing the light source apparatus 3 viewed in the +Z direction, and FIG. 11 is an exploded perspective view showing the light source apparatus 3 viewed in the -Z direction.

The housing 7 supports the fluorescence outputting apparatus 4 and the holding member 8, and accommodates the fluorescence outputting apparatus 4 and the holding member 8 therein, as shown in FIGS. 2, 3, 10, and 11. The housing 7 includes the base 71, a first urging member 72, two second urging members 73, a first cover member 74, a second cover member 75, a first heat dissipating member 76, and a second heat dissipating member 77, as shown in FIGS. 10 and 11.

### Configuration of base

The base 71 supports the light outputting member 6 and the holding member 8 in the -Y direction. That is, the light outputting member 6 and the holding member 8 are disposed at the base 71. In addition, the first urging member 72, the second urging members 73, the first cover member 74, the second cover member 75, the first heat dissipating member 76, and the second heat dissipating member 77 are fixed to the base 71. The base 71 is a metal body made of metal such as aluminum, iron, or stainless steel, and has high thermal conductivity and heat dissipation capability.

The base 71 is formed in the shape of a rectangular plate elongated along the +Z direction when viewed in the +Y direction. The base 71 has surfaces 71A, 71B, 71C, 71D, 71E, and 71F.

In the base 71, the first surface 71A is a surface oriented in the +Y direction, and the second surface 71B is a surface oriented in the -Y direction. The second surface 71B is a surface opposite the first surface 71A.

In the base 71, the third surface 71C is a surface oriented in the +Z direction, and the fourth surface 71D is a surface oriented in the -Z direction. The fourth surface 71D is a surface opposite the third surface 71C.

In the base 71, the fifth surface 71E is a surface oriented in the -X direction, and the sixth surface 71F is a surface oriented in the +X direction. The sixth surface 71F is a surface opposite the fifth surface 71E.

The surfaces 71C, 71D, 71E, and 71F are therefore surfaces that intersect with each of the first surface 71A and the second surface 71B.

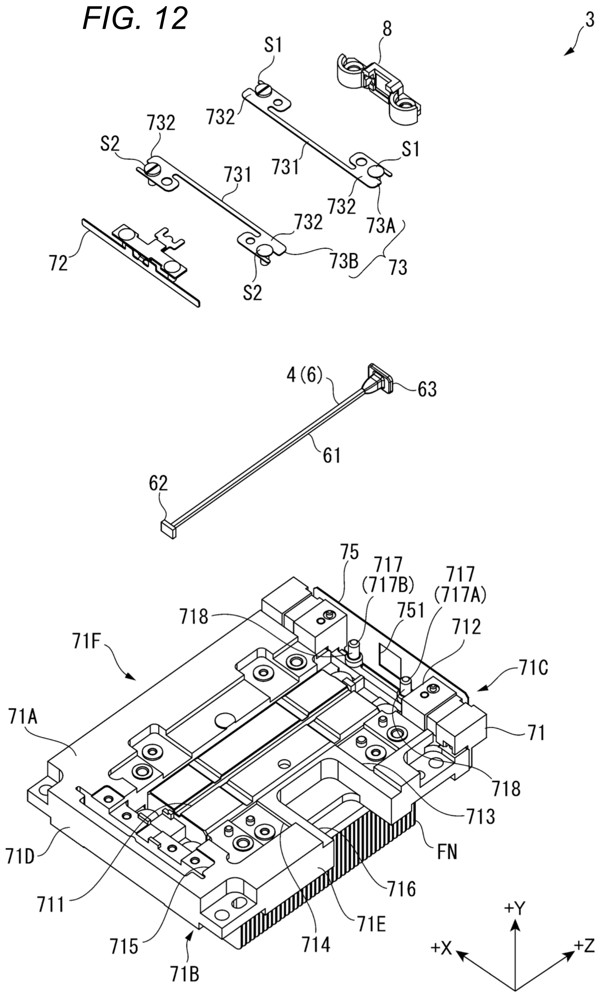

FIG. 12 is an exploded perspective view showing the light source apparatus 3 viewed in the +Y direction.

The base 71 further includes the first accommodating portion 711, a second accommodating portion 712, a first recessed portion 713, a second recessed portion 714, a placement portion 715, a third recessed portion 716, and pins 717, and the portions 711 to 715 are provided at the first surface 71A, as shown in FIGS. 10 and 12.

### Configuration of first accommodating portion

The first accommodating portion 711 accommodates the light guide 61. In detail, the light guide 61 is disposed in the first accommodating portion 711 in a state in which the first side surface 611 is exposed. The first accommodating portion 711 linearly extends along the +Z direction and is a groove that opens in the +Y direction. The first accommodating portion 711 is provided at the center of the first surface 71A in the +X direction.

### Configuration of second accommodating portion

The second accommodating portion 712 is provided at a position located in the +Z direction from the first accommodating portion 711. The second accommodating portion 712 is a recess that opens in the +Y and +Z directions, and is formed in a rectangular shape when viewed in the +Y direction.

The second accommodating portion 712 communicates with the first accommodating portion 711, which accommodates the light guide 61, and accommodates the +Z-side end portion of the light guide 61, the angle converter 63, the adhesive 64, and the holding member 8.

### Schematic configuration of pins

The pins 717 are configured with two pins 717 provided in the second accommodating portion 712. The two pins 717 are provided separate from each other in the +X direction and protrude in the +Y direction from the +Y-side bottom surface of the second accommodating portion 712. In detail, the two pins 717 are provided at positions where the two pins 717 sandwich in the +X direction the angle converter 63 disposed in the second accommodating portion 712. In more detail, the two pins 717 sandwiched the optical axis Ax of the angle converter 63 and are disposed line-symmetrically with respect to the optical axis Ax when viewed in the +Y direction. That is, the two pins 717 include a pin 717A located at a position located in the -X direction and a pin 717B located a position located in the +X direction.

The pins 717A and 717B each have a facing portion 718 at a surface oriented in the +X direction. The facing portion 718 corresponds to a first facing portion in the present embodiment, and faces in the +X direction an inner surface of each hole 87 of the holding member 8, which will be described later.

The pins 717A and 717B are each a stepped pin, as will be described later in detail.

### Configuration of first and second recessed portions

The first recessed portion 713 and the second recessed portion 714 are each a recessed portion extending along the +X direction and crossing the first accommodating section 711, which extends along the +Z direction, and is recessed in the -Y direction from the first surface 71A. The first recessed portion 713 and the second recessed portion 714 are separate from each other in the +Z direction, and the second recessed portion 714 is provided at a position located in the -Z direction from the first recessed portion 713. Out of the two second urging members 73, a second urging member 73A is fixed to the first recessed portion 713 with screws S1, and a second urging member 73B is fixed to the second recessed portion 714 with screws S2.

### Configurations of placement portion and third recessed portion

The placement portion 715 is a recessed portion provided at a -Z-side end portion of the first surface 71A and recessed in the -Y direction from the first surface 71A. The first urging member 72 is disposed at the placement portion 715.

The third recessed portion 716 is a recessed portion recessed in the +X direction from the fifth surface 71E of the base 71, and opens in the -X direction, the +Y direction, and the -Y direction. When the light source unit 5 is fixed to the base 71, the connector 53 of the substrate 51 is disposed in the third recessed portion 716.

### Configurations of first urging member and second urging members

The first urging member 72 is disposed at the placement portion 715, and urges the reflection member 62 toward the second end surface 616 of the light guide 61. The first urging member 72 can be configured, for example, with a plate spring.

The second urging members 73 are fixing members that fix the light guide 61 to the base 71. In detail, the second urging members 73 fix the light guide 61 to the base 71 with the light guide 61 urged against the base 71 in the +Y direction, so that the light guide 61 is fixed to the base 71.

In the present embodiment, two second urging members 73 are provided. One of the two second urging members 73 is the second urging member 73A disposed in the first recessed portion 713, and the other is the second urging member 73B disposed in the second recessed portion 714. The second urging member 73B is separate from the second urging member 73A in the -Z direction.

In the present embodiment, the second urging members 73A and 73B are each configured with a plate spring. Specifically, the second urging members 73A and 73B each include a pressing portion 731 extending along the +X direction and two fixing portions 732 provided at opposite ends of the pressing portion 731 in the +X direction.

The pressing section 731 is in contact with the first side surface 611 of the light guide 61, and presses the light guide 61 toward the first accommodating section 711.

The two fixing portions 732 are each fixed to the bottom surface of the first recessed portion 713 or the bottom surface of the second recessed portion 714 with screws. The light guide 61 is thus fixed to the first accommodating section 711.

Note that the urging force produced by the first urging member 72 is greater than the product of the number of the second urging members 73, the frictional force acting on the light guide 61, and the urging force produced by the second urging members 73. In the present embodiment, the urging force produced by the first urging member 72 is greater than the product of "2", which is the number of the second urging members 73A and 73B, the frictional force acting on the light guide 61, and the urging force produced by the second urging members 73. Therefore, in the state in which the light guide 61 is urged against the first accommodating portion 711 by the second urging members 73, the light guide 61 is urged in the +Z direction by the first urging member 72, so that the holding member 8 in contact with the angle converter 63 is urged in the +Z direction.

### Configurations of first cover member and second cover member

The first cover member 74 is fixed to the base 71 and covers the second accommodating portion 712 in the +Y direction. That is, the first cover member 74 covers the angle converter 63 and the holding member 8, the latter of which will be described later, in the +Y direction. The first cover member 74 has the shape of a rectangular plate elongated in the +X direction.

The second cover member 75 is fixed to the third surface 71C of the base 71 and covers the second accommodating portion 712 in the +Z direction. The second cover member 75 has the shape of a rectangular plate elongated in the +X direction. The second cover member 75 has a light exiting port 751, through which the fluorescence YL output from the angle converter 63 passes, and the fluorescence YL exits out of the light source apparatus 3 via the light exiting port 751.

The first cover member 74 and the second cover member 75 are made, for example, of the same metal as the base 71, and have heat dissipation capability.

### Configurations of first heat dissipating member and second heat dissipating member

The first heat dissipating member 76 is disposed at a position shifted from the light source unit 5 in the +Y direction, and is fixed to the base 71 with the first heat dissipating member 76 coupled to the first surface 51A of the substrate 51 of the light source unit 5 in a heat transferable manner. The first heat dissipating member 76 receives heat generated by the light source 52 and the connector 53 via the substrate 51 and dissipates the received heat. That is, the first heat dissipating member 76 dissipates the heat generated by the light source 52 and the connector 53 and transferred via the substrate 51 out of the light source apparatus 3.

The second heat dissipating member 77 is disposed at a position shifted from the base 71 in the -Y direction and is fixed to the second surface 71B of the base 71. The second heat dissipating member 77 is coupled in a heat transferable manner to a portion of the base 71 that is the portion constituting the first accommodating portion 711. The second heat dissipating member 77 dissipates the heat transferred from the light guide 61 via the base 71 out of the light source apparatus 3.

In the present embodiment, the first heat dissipating member 76 and the second heat dissipating member 77 each have a configuration in which multiple fins FN along the XY plane are arranged in the +Z direction. The present embodiment is, however, not necessarily configured as described above, and at least one of the heat dissipating members 76 and 77 may include multiple pins in place of the multiple fins FN. That is, the heat dissipating members 76 and 77 are not necessarily configured as described above.

### Configuration of holding member

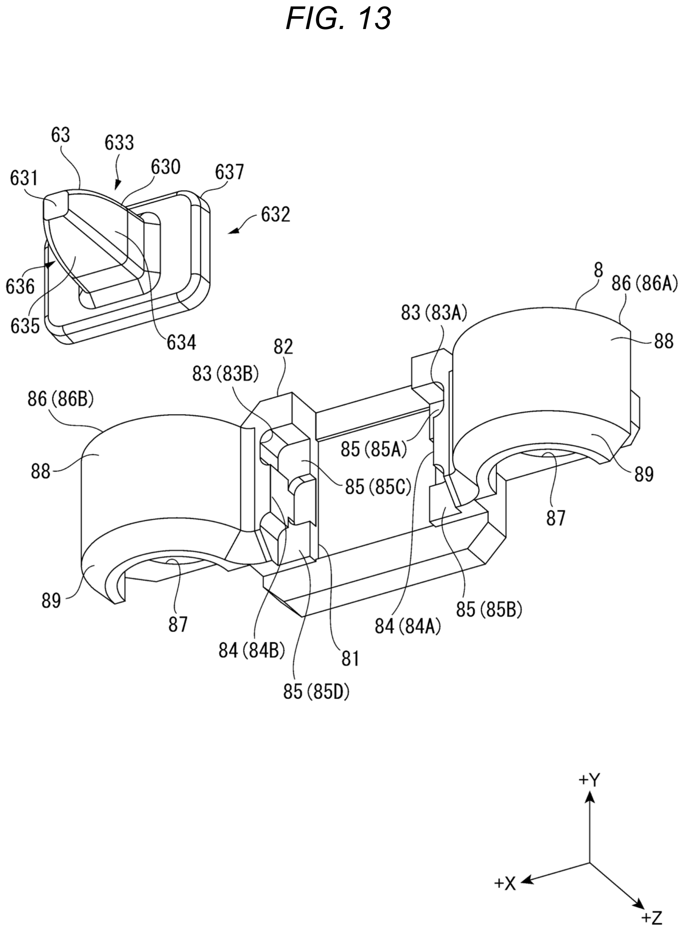

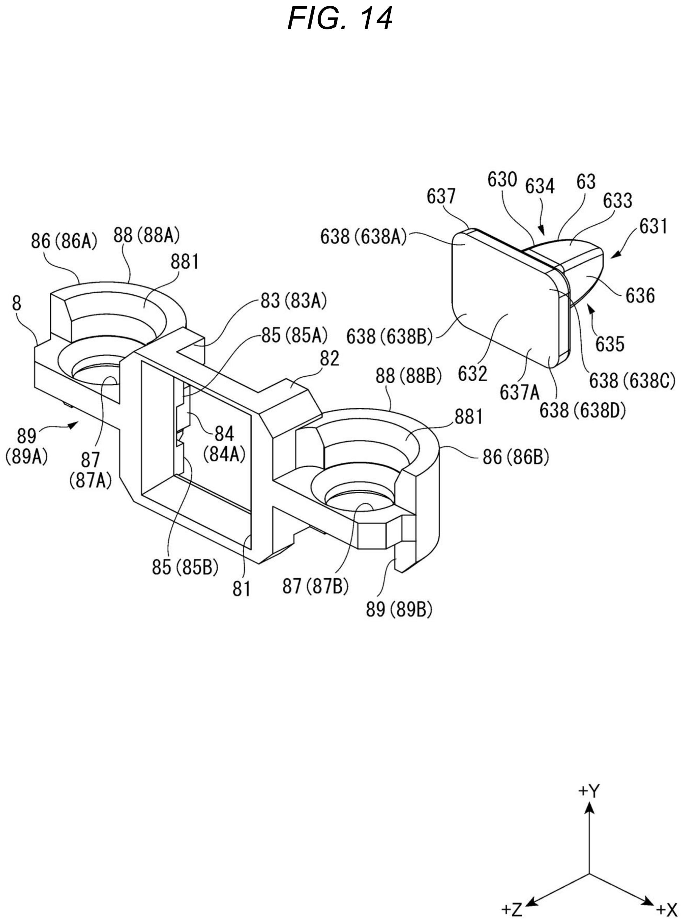

FIG. 13 is a perspective view showing the angle converter 63 and the holding member 8 viewed in the -Z direction, and FIG. 14 is a perspective view showing the angle converter 63 and the holding member 8 viewed in the +Z direction.

The holding member 8 is fixed to the base 71 while holding the angle converter 63, as shown in FIG. 10. In detail, the holding member 8 engages with the pins 717 provided in the second accommodating portion 712 while holding the angle converter 63, and is fixed to the pins 717 with an adhesive.

The holding member 8 includes an opening 81, a holder 82, and attachments 86, as shown in FIGS. 13 and 14.

The opening 81 is formed in a substantially rectangular shape when viewed in the ±Z direction. The opening 81 is an opening through which the light output from the angle converter 63 held by the holder 82 passes.

The holder 82 holds the angle converter 63 inserted in the -Z direction. The holder 82 is provided substantially at the center of the holding member 8 in the +X direction. The holder 82 includes a pair of recesses 83, a pair of positioners 84, and multiple contacts 85.

The pair of recesses 83 are recessed in the +Z direction at positions where the recesses 83 sandwich the opening 81 in the +X direction. Out of the pair of recesses 83, a recess 83A located at a position shifted from the opening 81 in the -X direction is a recess recessed in the -X direction and the +Z direction, and opens in the +X direction and the -Z direction. Out of the pair of recesses 83, a recess 83B located at a position shifted from the opening 81 in the +X direction is a recess recessed in the +X direction and the +Z direction, and opens in the -X direction and the -Z direction.

The pair of positioners 84 are protrusions protruding from surfaces of the pair of recesses 83 and facing each other, and sandwich and position the angle converter 63 disposed in the pair of recesses 83. Out of the pair of positioners 84, a positioner 84A located at a position located in the -X direction protrudes in the +X direction from a +X-side surface of the recess 83A. Out of the pair of positioners 84, a positioner 84B located at a position located in the +X direction protrudes in the -X direction from a -X-side surface of the recess 83B. The angle converter 63 is inserted into the pair of recesses 83 so as to be disposed between the pair of positioners 84.

The contact regions 638 at the light exiting end surface 632 of the angle converter 63 come into contact with the multiple contacts 85 in the -Z direction. The multiple contacts 85 include contacts 85A and 85B provided in the recess 83A, and contacts 85C and 85D provided in the recess 83B.

The contact 85A is provided at a position located in the +Y direction at a -Z-side surface of the recess 83A, and the contact 85B is provided at a position located in the -Y direction at the -Z-side surface of the recess 83A. The contact region 638A comes into contact with the contact 85A, and the contact region 638B comes into contact with the contact 85B.

The contact 85C is provided at a position located in the +Y direction at a -Z-side surface of the recess 83B, and the contact 85D is provided at a position located in the -Y direction at the -Z-side surface of the recess 83B. The contact region 638C comes into contact with the contact 85C, and the contact region 638D comes into contact with the contact 85D.

The angle converter 63 is held by the holding member 8 with the contact regions 638 being in contact with at least three contacts 85 out of the contacts 85A, 85B, 86C, and 86D. The holding member 8 thus precisely holds the angle converter 63.

The attachments 86 are provided at positions where the attachments 86 sandwich the opening 81 and the holder 82 in the +X direction, and are attached to the pins 717 of the base 71. The attachments 86 include an attachment 86A located at a position shifted from the opening 81 in the -X direction, and an attachment 86B located at a position shifted from the opening 81 in the +X direction.

The attachments 86A and 86B each have a hole 87, a first wall 88, and a second wall 89. Hereinafter, the hole 87, the first wall 88, and the second wall 89 that constitute the attachment 86A are referred to as a hole 87A, a first wall 88A, and a second wall 89A, and the hole 87, the first wall 88, and the second wall 89 that constitute the attachment 86B are referred to as a hole 87B, a first wall 88B, and a second wall 89B.

The holes 87 are holes passing through the attachments 86 along the +Y direction, and the pins 717 of the base 71 are inserted into the holes 87 in the +Y direction, as shown in FIG. 14. In detail, the pin 717A is inserted into the hole 87A along the +Y direction, and the pin 717B is inserted into the hole 87B along the +Y direction. The cross-sectional shape of each of the holes 87 will be described later in detail.

The first wall 88A is a wall that protrudes in the +Y direction from the circumferential edge of the hole 87A and faces the pin 717A inserted into the hole 87A. In detail, the first wall 88A is a semicircular wall protruding in the +Y direction from the -Z-side circumferential edge out of the circumferential edge of the hole 87A. The first wall 88A has an inclining surface 881, which is located at a portion of the first wall 88A and is facing the interior of the hole 87A and approaches the center of the hole 87A as extending in the -Y direction. That is, the inclining surface 881 is an inclining surface that approaches the pin 717A inserted into the hole 87A as extending in the -Y direction. The first wall 88B is configured in the same manner as the first wall 88A.

The second wall 89A is a wall that protrudes in the -Y direction from the circumferential edge of the hole 87A and faces the pin 717A inserted into the hole 87A. In detail, the second wall 89A is a semicircular wall protruding in the -Y direction from the -Z-side circumferential edge out of the circumferential edge of the hole 87A. The second wall 89B is configured in the same manner as the second wall 89A.

### Detailed configuration of pins

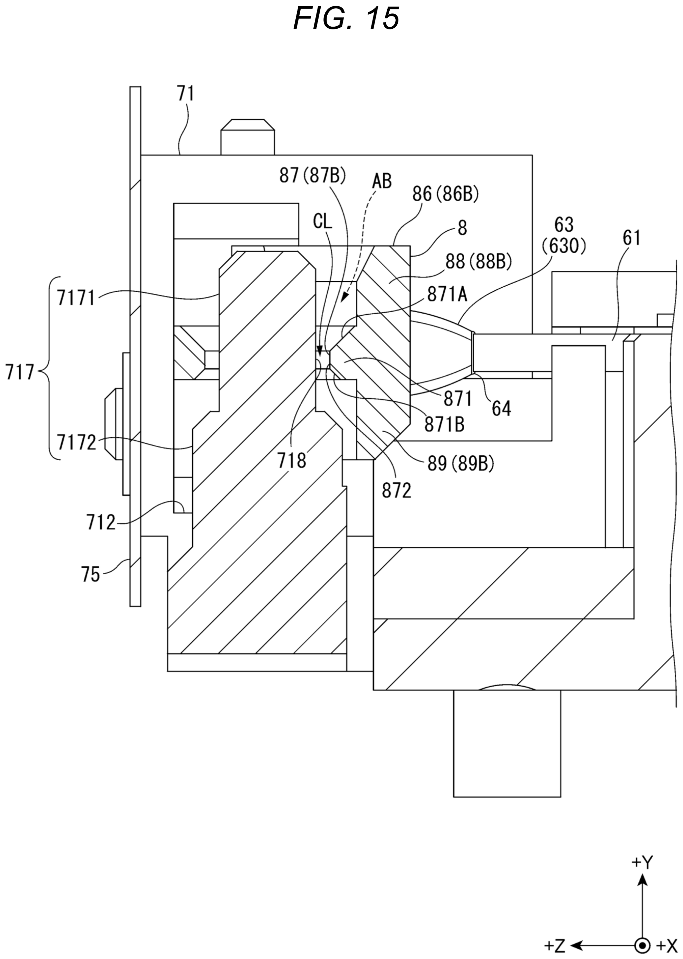

FIG. 15 shows the cross section of the light source apparatus 3 taken along a YZ plane in one of the pins 717. Note that FIG. 15 shows none of the first cover member 74, the heat dissipating members 76 and 77, and the light source unit 5.

The pin 717 is a stepped pin having an insertion portion 7171 and a large-diameter portion 7172 having different outer diameters, as shown in FIG. 15.

The insertion portion 7171 is a portion formed in a substantially columnar shape, and is inserted into the hole 87 in the -Y direction. The facing portion 718 described above is a -Z-side portion of the insertion portion 7171. That is, the outer diameter of the insertion portion 7171 is smaller than the inner diameter of the hole 87.

The large-diameter portion 7172 is a portion formed in a substantially columnar shape and is a portion located at a position shifted from the insertion portion 7171 in the -Y direction. The outer diameter of the large-diameter portion 7172 is greater than the outer diameter of the insertion portion 7171 and greater than the inner diameter of the hole 87.

### Detailed configuration of holes

The holes 87 each have a protruding portion 871 protruding from the inner surface of the hole 87 toward the center of the hole 87, and a facing portion 872, as shown in FIG. 15.

The protruding portion 871 has a first inclining surface 871A and a second inclining surface 871B.

The first inclining surface 871A is a +Y-side surface of the protruding portion 871, and inclines so as to approach the center axis of the hole 87 as extending in the -Y direction.

The second inclining surface 871B is a -Y-side surface of the protruding portion 871, and inclines so as to approach the center axis of the hole 87 as extending in the +Y direction.

That is, the hole 87 is so shaped that the diameter thereof decreases and then increases as extending in the +Y direction.

The facing portion 872 corresponds to a second facing portion of the holding member 8. The facing portion 872 is a +Z-side portion of the inner surface of the hole 87. That is, the facing portion 872 is located at a +Z-side surface of the protruding portion 871. The facing portion 872 faces the facing portion 718 located at the insertion portion 7171 in the +Z direction when the pin 717 is inserted into the hole 87.

### Procedure of attaching light outputting member to base

The procedure of attaching the light outputting member 6 to the base 71 include, for example, the steps below. In the following description, it is assumed that the angle converter 63 is bonded and fixed to the light guide 61.

First, the light outputting member 6 is positioned with respect to the base 71 with the aid of a positioning jig that is not shown in a way that the light guide 61 is disposed in the first accommodating portion 711 and the angle converter 63 is disposed in the second accommodating portion 712.

Next, the second urging members 73A and 73B are attached to the first recessed portion 713 and the second recessed portion 714 of the base 71 to temporarily fix the light guide 61 disposed in the first accommodating portion 711.

Then, after the positioning jig is removed, the holding member 8 is so attached to the angle converter 63 that the contact regions 638 of the angle converter 63 come into contact with the contacts 85. In this process, the holding member 8 is so disposed in the second accommodating portion 712 that the pins 717 are inserted into the holes 87 of the holding member 8.

The first urging member 72 is then disposed at the placement portion 715 of the base 71 to press and urge the reflection member 62 against the second end surface 616. The light outputting member 6 is thus urged in the +Z direction, in which the angle converter 63 is pressed against the holding member 8.

Next, the temporarily fixed second urging members 73A and 73B are fixed to the first recessed portion 713 and the second recessed portion 714.

As indicated by the dotted lines in Fig. 15, adhesive AB is injected, along the inclined surface 881 of the first wall portion 88, into the holes 87 of the holding member 8 in which the pins 717 are inserted to thus bond each pin 717 to the inner surface of the corresponding hole 87, and in turn bond and fix the holding member 8 to the second accommodating portion 712, as indicated by the dotted line in FIG. 15. The holding member 8 is thus fixed to the second accommodating portion 712 with the angle converter 63 urged in the +Z direction by the first urging member 72 being in close contact with the contacts 85 of the holding member 8.

In the present embodiment, the adhesive AB is injected to the gap between the facing portion 718 of each of the pins 717, which is the first facing portion oriented in the -Z direction, and the facing portion 872 of the inner surface of the corresponding hole 87, which is the second facing portion oriented in the +Z direction. As described above, since the adhesive AB is injected into a clearance CL between the facing portion 718 and the facing portion 872, and is provided with respect to the facing portion 718 in the -Z direction, which is the direction opposite the urging direction of the first urging member 72, the clearance CL is filled with the adhesive AB, so that the facing portion 718 and the facing portion 872 can be bonded and fixed to each other in a stable manner.

It is preferable that the adhesive AB is injected not only into the gap between the facing portion 718 and the facing portion 872 but also into the gap between the pin 717 and the first wall 88 and/or the gap between the pin 717 and the second wall 89. In this case, at least one of the first wall 88 and the second wall 89 can be bonded and fixed to the pin 717. The bonding strength between the pins 717 and the holding member 8 and the bonding strength between the base 71 and the holding member 8 can therefore be increased, so that the holding member 8 can be firmly fixed to the base 71.

### Advantages of first embodiment

The projector 1 according to the present embodiment described above provides the following advantages.

The projector 1 includes the light source apparatus 3, the light modulators 27, which modulate the light output from the light source apparatus 3, and the projection optical apparatus 29, which projects the light modulated by the light modulators 27.

The light source apparatus 3 includes the light emitters 521, the light guide 61, the angle converter 63, the base 71, and the holding member 8.

The light guide 61 has the first side surface 611, which extends in the +Z direction, the first end surface 615, which intersects with the first side surface 611 and is oriented in the +Z direction, and the second end surface 616, which intersects with the first side surface 611 and is oriented in the -Z direction. The +Z direction corresponds to a first direction, and the -Z direction corresponds to the direction opposite the first direction.

The angle converter 63 is bonded to the first end surface 615 and converts the angle of the light output via the first end surface 615. The angle converter 63 includes the light passage portion 630 and the flange 637.

The light passage portion 630 is a portion through which the light incident from the light guide 61 passes.

The flange 637 is a portion which protrudes from the light passage portion 630 in the ±X direction and the ±Y direction, which intersect with the +Z direction, and through which the fluorescence YL having entered the angle converter 63 from the light guide 61 does not pass.

The light emitters 521 emit light toward the first side surface 611.

The light guide 61 and the holding member 8 are disposed at the base 71. The base 71 includes the facing portions 718 as the first facing portion.

The holding member 8 comes into contact with the angle converter 63 in the +Z direction. The holding member 8 has the contacts 85 and the facing portions 872.

The flange 637 comes into contact with the contacts 85 along the +Z direction.

The facing portions 872 correspond to the second facing portion. The facing portions 872 face the facing portions 718 in the +Z direction.

The holding member 8 is fixed to the base 71 with the adhesive AB, which fills the clearances CL provided between the facing portions 718 and the facing portions 872.

According to the configuration described above, the clearances CL used to adjust the posture of the holding member 8 are provided between the facing portions 718 and the facing portions 872, which face each other in the +Z direction, to cause one of the flange 637 and the contacts 85 to be in contact with each other along the +Z direction without inclining with respect to the other. The clearances CL are filled with the adhesive AB, so that the holding member 8 is fixed to the base 71.

According to the configuration described above, even when variation in the bonding between the light guide 61 and the angle converter 63 occurs, the clearances CL between the facing portions 718 and the facing portions 872 can absorb the variation in the bonding, so that the flange 637 can be appropriately brought into contact with the contacts 85. Since the clearances CL are filled with the adhesive AB, which fixes the holding member 8 to the base 71, the state in which the flange 637 and the contacts 85 are appropriately in contact with each other can be maintained. The state described above can prevent the rotational stress around an axis perpendicular to the +Z direction from acting on the angle converter 63, so that a situation in which one of the light guide 61 and the angle converter 63 separates from the other can be avoided.

In the light source apparatus 3, the contacts 85 come into contact with positions on the flange 637 that sandwich the optical axis Ax of the angle converter 63 in the +Y direction perpendicular to the +Z direction, and positions on the flange 637 that sandwich the optical axis Ax of the angle converter 63 in the +X direction perpendicular to each of the +Z and +Y directions. That is, the contacts 85 come into contact with the contact regions 638A and 638C and the contact regions 638B and 638D of the flange 637, which sandwich the optical axis Ax of the angle converter 63 in the +Y direction perpendicular to the +Z direction, and come into contact with the contact regions 638A and 638B and the contact regions 638C and 638D, which sandwich the optical axis Ax of the angle converter 63 in the +X direction perpendicular to each of the +Z and +Y directions. Note that the +Y direction corresponds to a second direction, and the +X direction corresponds to a third direction.

According to the configuration described above, the flange 637 and the contacts 85 can be brought into contact with each other at at least three points sandwiching the optical axis Ax of the angle converter 63. The situation in which the rotational stress described above acts on the angle converter 63 can therefore be effectively suppressed. The situation in which one of the light guide 61 and the angle converter 63 separates from the other can therefore be effectively suppressed.

In the light source apparatus 3, one of the base 71 and the holding member 8 has a pin, and the other has a hole into which the pin is inserted in the +Y direction, which intersects with the +Z direction.

In the present embodiment, the base 71 has the pins 717, and the holding member 8 has the holes 87. The facing portions 718 as the first facing portion are provided at the pins 717, and the facing portions 872 as the second facing portion are provided at the inner surfaces of the holes 87.

According to the configuration described above, the facing portions 718 can each readily face the corresponding facing portion 872 in the +Z direction, and the holding member 8 can be readily positioned with respect to the base 71. The holding member 8 can therefore be readily fixed to the base 71.

When the base 71 has a hole and the holding member 8 has a pin, the first facing portion may be provided at the inner surface of the hole and the second facing portion may be provided at the pin. Also in this case, the same advantages described above can be provided.

In the light source apparatus 3, the base 71 includes the pins 717 each provided with the facing portion 718. The holding member 8 has the holes 87 each having an inner surface provided with the facing portion 872.

The configuration described above prevents the holes 87, into which the adhesive AB is injected, from being covered by the holding member 8 when the pins 717 are inserted into the holes 87 and the holding member 8 is aligned with the base 71, unlike the case where the holding member 8 fixed to the base 71 has pins. That is, the holes 87 can be exposed even after the pins 717 are inserted into the holes 87. The adhesive AB can therefore be readily injected into the holes 87, so that the step of bonding the holding member 8 to the base 71 can be simplified.

In the light source apparatus 3, multiple pins 717 are provided, and multiple holes 87 are provided in accordance with the multiple pins 717. The multiple pins 717 are separate from each other in the +X direction, which intersects with each of the +Z and +Y directions. The +X direction corresponds to the third direction perpendicular to each of the first and second directions.

The configuration described above can prevent the holding member 8 from rotating around the center axis of each of the pins 717. The holding member 8 can therefore be precisely fixed to the base 71.

In the light source apparatus 3, the holding member 8 includes the first wall 88 protruding in the +Y direction from the circumference of the hole 87 and facing the pin 717, and the second wall 89 protruding from the circumference of the hole 87 in the -Y direction and facing the pin 717.

The adhesive AB is provided between each of the facing portions 718 and the corresponding facing portion 872 and between each of the pins 717 and at least one of the first wall 88 and the second wall 89.

According to the configuration described above, the area where the adhesive AB is in contact with the pins 717 can be increased, and the area where the adhesive AB is in contact with the holding member 8 can be increased. Furthermore, when the first walls 88 are provided, a situation in which the adhesive AB overflows from each of the holes 87 to the exterior of the hole 87 can be suppressed.

In the light source apparatus 3, the first walls 88 each have the inclining surface 881, which approaches the pin 717 as extending in the -Y direction.

According to the configuration described above, when the adhesive AB is injected into each of the holes 87 in the +Y direction, which is the direction in which the pin 717 is inserted into the hole 87, the adhesive AB can be injected along the inclining surface 881, so that the adhesive AB can be readily injected into the hole 87.

In the light source apparatus 3, the holding member 8 has the protruding portion 871 provided at the inner surface of each of the holes 87 and protruding toward the pin 717.

According to the configuration described above, the dimension between the inner surface of each of the holes 87 and the pin 717 can be reduced as compared with a case where the protruding portion 871 is not provided. Accordingly, the amount of the adhesive AB used to bond each of the pins 717 to the inner surface of the hole 87 can be reduced, and the adhesive AB can be readily retained in the hole 87.

In the light source apparatus 3, the pins 717 each include the insertion portion 7171 located at a position located in the +Y direction and inserted into the hole 87, and the large-diameter portion 7172 located at a position shifted from the insertion portion 7171 in the -Y direction and having an outer diameter greater than the outer diameter of the insertion portion 7171.

According to the configuration described above, the pins 717 are each configured as a stepped pin. Since the pins 717 can thus be readily inserted into the holes 87, the holding member 8 can be readily positioned with respect to the base 71. In addition, a situation in which the adhesive AB injected into the holes 87 leaks out in the -Y direction can be suppressed.

The light source apparatus 3 includes the reflection member 62, which reflects the light output via the second end surface 616 toward the second end surface 616, and the first urging member 72, which urges the reflection member 62 against the second end surface 616. The adhesive AB is provided at a position located in the -Z direction from each of the facing portions 718, which is the first facing portion.

According to the configuration described above, since the reflection member 62 is urged against the second end surface 616 by the first urging member 72, a situation in which an air layer is interposed between the second end surface 616 and the reflection member 62 can be suppressed, and a state in which the reflection member 62 causes light output via the second end surface 616 to return into the light guide 61 can be maintained. The amount of the fluorescence YL output via the first end surface 615 can thus be increased.

The urging force produced by the first urging member 72 and acting on the reflection member 62 also acts on the angle converter 63, which is in contact with the holding member 8. That is, the angle converter 63 is urged against the holding member 8. Since the adhesive AB is provided at a position shifted from each of the facing portions 718 in the -Z direction, a force that compresses the adhesive AB in the +Z direction continuously acts thereon. Therefore, as compared with a case where the adhesive AB is provided at a position shifted from each of the facing portions 718 in the +Z direction, the state in which the facing portion 718 and the facing portion 872 are bonded to each other, and in turn the state in which the base 71 and the holding member 8 are bonded to each other can be readily maintained.

The light source apparatus 3 includes the second urging members 73, which urge the light guide 61 against the base 71 along the -Y direction, which is a direction perpendicular to the +Z direction. The urging force produced by the first urging member 72 is greater than the product of the number of the second urging members 73, the frictional force acting on the light guide 61, and the urging force produced by the second urging members 73.

According to the configuration described above, since the urging force in each of the +Z direction and the -Y direction acts on the light guide 61, a situation in which the position of the light guide 61 is displaced at the base 71 can be suppressed even when the light source apparatus 3, for example, falls and an impact due to the falling acts on the light source apparatus 3.

The urging force in the +Z direction acting on the light guide 61 is greater than the urging force in the -Y direction acting on the light guide 61. The state in which the flange 637 of the angle converter 63 is in contact with the contacts 85 of the holding member 8 can therefore be maintained.

In the light source apparatus 3, the light guide 61 contains a phosphor that converts the wavelength of light incident from the light emitters 521. That is, the light guide 61 contains a phosphor that converts the wavelength of the excitation light EL incident from the light emitters 521.

According to the configuration described above, the light source apparatus 3 can output the fluorescence YL having wavelengths different from the wavelength of the excitation light EL emitted from the light emitters 521.

### Second embodiment

A second embodiment of the present disclosure will next be described.

A projector according to the present embodiment is configured in the same manner as the projector according to the first embodiment, but differs therefrom in that the contacts of the holding member are each provided with a hemispherical protrusion. Note that in the following description, portions that are the same or substantially the same as the portions having already been described have the same reference characters, and will not be described.

### Schematic configurations of projector and light source apparatus

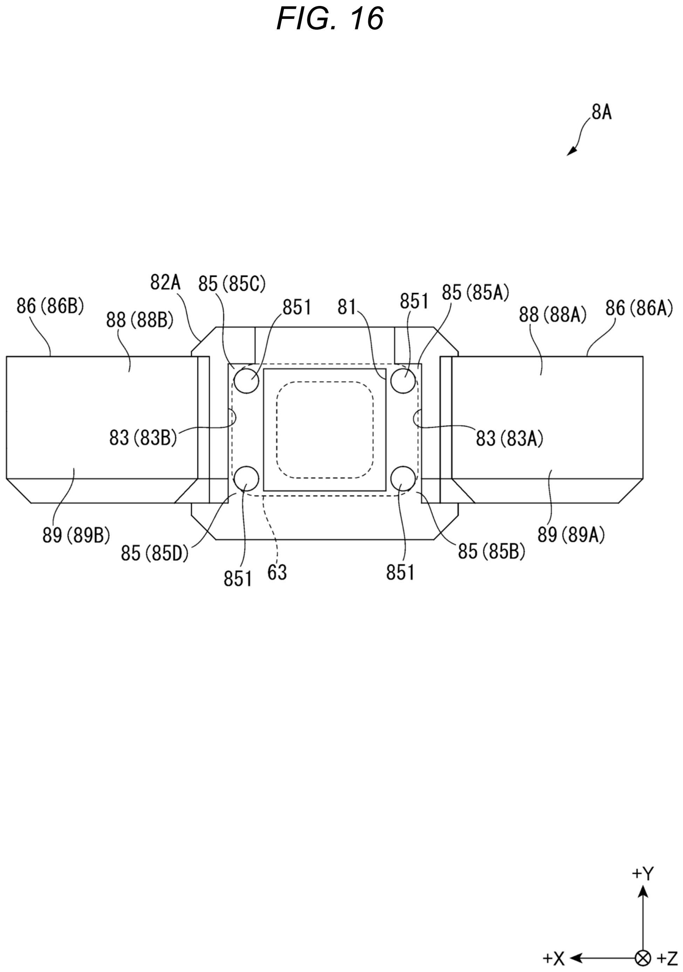

FIG. 16 shows a holding member 8A provided in the projector according to the present embodiment and viewed in the -Z direction.

The projector according to the present embodiment has elements and functions that are the same as those of the projector 1 according to the first embodiment except that the holding member 8 is replaced with the holding member 8A shown in FIG. 16. That is, the light source apparatus according to the present embodiment has elements and functions that are the same as those of the light source apparatus 3 according to the first embodiment except that the holding member 8 is replaced with the holding member 8A.

### Configuration of holding member

The holding member 8A has elements and functions that are the same as those of the holding member 8 according to the first embodiment except that the holder 82 is replaced with a holder 82A. That is, the holding member 8A includes the opening 81, the holder 82A, and the attachments 86. The holder 82A further includes multiple curved surfaces 851 in addition to the pair of recesses 83 and the multiple contacts 85. Note that the holding member 8A shown in FIG. 16 does not include the pair of positioners 84, but not necessarily, and the holding member 8A according to the present embodiment may include the pair of positioners 84.

The multiple curved surfaces 851 each protrude in the -Z direction from the corresponding one of the multiple contacts 85. In other words, the multiple contacts 85 each have the corresponding one of the multiple curved surfaces 851.

The multiple curved surfaces 851 are each provided at the -Z-side surface of the corresponding contact 85, and are each formed in a substantially hemispherical shape having a cross-sectional area that decreases as extending in the -Z direction. The contact regions 638 of the angle converter 63 come into contact in the -Z direction with the -Z-side end portions of the curved surfaces 851.

### Advantages of second embodiment

The projector according to the present embodiment described above provides the advantages below as well as the same advantages provided by the projector 1 according to the first embodiment.

In the light source apparatus according to the present embodiment, each of the contacts 85 of the holding member 8A protrudes in a hemispherical shape in the -Z direction and has the curved surface 851, which comes into contact with the +Z-side surface 637A of the flange 637, and the -Z direction corresponds to the direction opposite the first direction.

According to the configuration described above, as compared with the case where the +Z-side surface 637A of the flange 637 comes into surface contact with the contacts 85, the surface 637A can be readily brought into contact with the contacts 85 even when the surface 637A intersects with the +Z direction.

### Variations of embodiments

The present disclosure is not limited to each of the embodiments described above, and variations, improvements, and other modifications to the extent that the advantages of the present disclosure can be achieved fall within the scope of the present disclosure.

In each of the embodiments described above, it is assumed that the four contact regions 638 of the flange 637 of the angle converter 63 come into contact with the four contacts 85 of the holding member 8 in the +Z direction. The present disclosure is, however, not necessarily configured as described above, and the flange 637 may come into contact with at least three of the four contacts 85. In this case, it is preferable that a triangle having vertices that coincide with the three contacts 85 in contact with the flange 637 contains an intersection with the optical axis Ax.

In each of the embodiments described above, it is assumed that the base 71 has the pins 717, and that the holding member 8 has the holes 87. It is further assumed that the -Z-side portion of each of the pins 717 is the facing portion 718 as the first facing portion, and that the +Z-side portion of the inner surface of each of the holes 87 is the facing portion 872 as the second facing portion facing the first facing portion. The present disclosure is, however, not necessarily configured as described above, and the first facing portion may be a -Z-side portion of an element of the base 71 other than the pins 717, and the second facing portion may be a +Z-side portion of an element of the holding member 8 other than the holes 87. In this case, the base 71 may not include the pins 717, and the holding member 8 may not include the holes 87, into which the pins 717 are inserted.

The base 71 may have a hole, and the holding member 8 may include a pin to be inserted into the hole, as described above.

In each of the embodiments described above, it is assumed that the base 71 includes the two pins 717, and that the holding member 8 has the two holes 87, into which the pins 717 are inserted. The present disclosure is, however, not necessarily configured as described above, and the base 71 may include one or three or more pins 717, and the holding member 8 may have holes 87 the number of which is equal to the number of the pins 717.

The same applies to the case where the base 71 has a hole and the holding member 8 includes a pin.

In each of the embodiments described above, it is assumed that the holding member 8 includes the first walls 88 and the second walls 89. The present disclosure is, however, not necessarily configured as described above, and the first walls 88 and/or the second walls 89 may be omitted. Even when the holding member 8 includes the first walls 88 and the second walls 89, the pins 717 may not be fixed to the walls 88 or 89 with the adhesive AB.

It is further assumed that the first walls 88 each have the inclining surface 881. The present disclosure is, however, not necessarily configured as described above, and the first walls 88 may not each have the inclining surface 881.

In each of the embodiments described above, it is assumed that the pins 717 are each a stepped pin having the insertion portion 7171 and the large-diameter portion 7172. The present disclosure is, however, not necessarily configured as described above, and the pins 717 may each be a pin formed in a substantially columnar shape in which the area of the cross section perpendicular to the center axis of the pin 717 does not change.

In each of the embodiments described above, it is assumed that the light source apparatus 3 includes the first urging member 72, which urges the reflection member 62 against the second end surface 616. The present disclosure is, however, not necessarily configured as described above, and the first urging member 72 may be omitted. In this case, the reflection member 62 may be bonded and fixed to the second end surface 616.

In each of the embodiments described above, it is assumed that the adhesive AB is provided at a position located in the -Z direction from each of the facing portions 718, which is the first facing portion. The present disclosure is, however, not necessarily configured as described above, and the adhesive AB may be provided so as to surround the circumference of each of the pins 717.

In each of the embodiments described above, it is assumed that the second urging members 73, which press and urge in the +Y direction the light guide 61 disposed in the first accommodating portion 711, are provided, and that the second urging members 73 include the second urging member 73A and the second urging member 73B, which are separate from each other in the +Z direction. The present disclosure is, however, not necessarily configured as described above, and the second urging members 73 may be omitted as long as the light guide 61 can be housed in the first accommodating portion 711. The number of the second urging members 73, which urge the light guide 61, is not limited to two, and may be one or three or more.

In each of the embodiments described above, it is assumed that the urging force produced by the first urging member 72 is greater than the product of the number of the second urging members 73, the frictional force acting on the light guide 61, and the urging force produced by the second urging members 73. The present disclosure is, however, not necessarily configured as described above, and the urging force produced by the first urging member 72 may be smaller than or equal to the product of the number of the second urging members 73, the frictional force acting on the light guide 61, and the urging force produced by the second urging members 73.

In each of the embodiments described above, it is assumed that the light guide 61 contains a phosphor that converts the wavelength of the incident excitation light EL. The present disclosure is, however, not necessarily configured as described above, and the light guide 61 may not contain a phosphor. In this case, the light source apparatus 3 can be configured as a light source apparatus that collects and outputs the light emitted from the multiple light emitters 521.

In each of the embodiments described above, it is assumed that the projector includes the three light modulators 27R, 27G, and 27B. The present disclosure is, however, not necessarily configured as described above, and is also applicable to a projector including two or fewer light modulators, or four or more light modulators.

In each of the embodiments described above, it is assumed that the image projecting apparatus 2 includes the aforementioned optical parts arranged in the layout shown in FIG. 1. The present disclosure is, however, not necessarily configured as described above, and the optical parts provided in the image projecting apparatus 2 are not limited to those described above, neither is the layout of the optical parts.

In each of the embodiments described above, it is assumed that the light modulators 27 each include a transmissive liquid crystal panel having a light incident surface and a light exiting surface different from each other. The present disclosure is, however, not necessarily configured as described above, and the light modulators 27 may each include a reflective liquid crystal panel having a surface that serves both as the light incident surface and the light exiting surface. Furthermore, a light modulator using any element other than a liquid-crystal-based element, such as a device using micromirrors, for example, a digital micromirror device (DMD), may be employed as long as the element is capable of modulating an incident luminous flux to form image light according to image information.

The aforementioned embodiments each have been described with reference to the case where the projector 1 includes the light source apparatus according to any of the embodiments of the present disclosure. The present disclosure is, however, not necessarily configured as described above, and the light source apparatus according to any of the embodiments of the present disclosure may be used alone, and employed in an electronic instrument other than a projector, for example, a lighting fixture and a headlight of an automobile.

### Summary of present disclosure

The present disclosure will be summarized below as additional remarks.

### Additional Remark 1

A light source apparatus including:
a light guide having a side surface extending in a first direction, a first end surface intersecting with the side surface and oriented in the first direction, and a second end surface intersecting with the side surface and oriented in a direction opposite the first direction;
an angle converter bonded to the first end surface and configured to convert an angle of light output via the first end surface;
a light emitter configured to emit light toward the side surface,
a holding member with which the angle converter is in contact in the first direction; and
a base at which the light guide and the holding member are disposed,
in which the angle converter includes
a light passage portion through which light incident from the light guide passes, and
a flange which protrudes from the light passage portion in a direction intersecting with the first direction and through which the light incident from the light guide on the angle converter does not pass,
the base has a first facing portion,
the holding member has
contacts with which the flange is in contact along the first direction, and
a second facing portion facing the first facing portion in the first direction, and
the holding member is fixed to the base with an adhesive that fills a clearance provided between the first facing portion and the second facing portion.

According to the configuration described above, the clearance used to adjust the posture of the holding member is provided between the second facing portion of the holding member and the first facing portion of the base, the two facing portions facing each other in the first direction, to cause one of the flange of the angle converter and the contacts of the holding member to be in contact with each other along the first direction without inclining with respect to the other. The clearance is filled with the adhesive, so that the holding member is fixed to the base.

According to the configuration described above, even when variation in the bonding between the light guide and the angle converter occurs, the clearance between the first facing portion and the second facing portion can absorb the variation in the bonding, so that the flange of the angle converter can be appropriately brought into contacts with the contact of the holding member. Since the clearance is filled with the adhesive, which fixes the holding member to the base, the state in which the flange and the contacts are appropriately in contact with each other can be maintained. The state described above can prevent rotational stress around an axis perpendicular to the first direction from acting on the angle converter, so that a situation in which one of the light guide and the angle converter separates from the other can be avoided.

### Additional Remark 2

The light source apparatus according to Additional Remark 1, in which
the contacts are in contact with the flange at positions where some of the contacts sandwich an optical axis of the angle converter in a second direction perpendicular to the first direction and at positions where some of the contacts sandwich the optical axis of the angle converter in a third direction perpendicular to each of the first and second directions.

According to the configuration described above, the flange and the contacts can be brought into contact with each other at at least three points sandwiching the optical axis of the angle converter. The situation in which the rotational stress described above acts on the angle converter can therefore be effectively suppressed. The situation in which one of the light guide and the angle converter separates from the other can therefore be effectively suppressed.

### Additional Remark 3

The light source apparatus according to Additional Remark 1 or 2, in which
one of the base and the holding member includes a pin,
another the other of the base and the holding member has a hole into which the pin is inserted in a second direction perpendicular to the first direction,
when the base includes the pin and the holding member has the hole, the first facing portion is provided at the pin, and the second facing portion is provided at an inner surface of the hole, and
when the base has the hole and the holding member includes the pin, the first facing portion is provided at an inner surface of the hole, and the second facing portion is provided at the pin.

According to the configuration described above, the first and second facing portions can readily face each other in the first direction, and the holding member can be readily positioned with respect to the base. The holding member can therefore be readily fixed to the base.

### Additional Remark 4

The light source apparatus according to Additional Remark 3, in which
the base includes the pin provided with the first facing portion, and
the holding member has the hole having an inner surface provided with the second facing portion.

The configuration described above prevents the hole, into which the adhesive is injected, from being covered by the holding member when the pin is inserted into the hole and the holding member is aligned with the base, unlike a case where the holding member fixed to the base has a pin. That is, the hole can be exposed even after the pin is inserted into the hole. The adhesive can therefore be readily injected into the hole, so that the step of bonding the holding member to the base can be simplified.

### Additional Remark 5

The light source apparatus according to Additional Remark 3 or 4, in which
the multiple pins are provided ,
the hole is configured with multiple holes in correspondence with the multiple pins, and
the multiple pins are separate from each other in a third direction perpendicular to each of the first direction and the second direction.

The configuration described above can prevent the holding member from rotating around the center axis of each of the pins. The holding member can therefore be precisely fixed to the base.

### Additional Remark 6

The light source apparatus according to any one of Additional Remarks 3 to 5, in which
the holding member has
a first wall protruding from a circumference of the hole in the second direction and facing the pin, and
a second wall protruding from the circumference of the hole in a direction opposite the second direction and facing the pin, and
the adhesive is provided between the first facing portion and the second facing portion and between the pin and at least one of the first wall and the second wall.

According to the configuration described above, the area where the adhesive is in contact with the pin can be increased, and the area where the adhesive is in contact with the holding member can be increased. Furthermore, when the first wall is provided, a situation in which the adhesive overflows from the hole to the exterior of the hole can be suppressed.

### Additional Remark 7

The light source apparatus according to Additional Remark 6, in which
the first wall has an inclining surface that approaches the pin as extending in a direction opposite the second direction.

According to the configuration described above, when the adhesive is injected into the hole in the direction in which the pin is inserted into the hole, the adhesive can be injected along the inclining surface, so that the adhesive can be readily injected into the hole.

### Additional Remark 8

The light source apparatus according to any one of Additional Remarks 3 to 7, in which
the holding member has a protrusion provided at the inner surface of the hole and protruding toward the pin.

According to the configuration described above, the dimension between the inner surface of the hole and the pin can be reduced as compared with a case where the protruding portion is not provided. Accordingly, the amount of the adhesive used to bond the pin to the inner surface of the hole can be reduced, and the adhesive can be readily retained in the hole.

### Additional Remark 9

The light source apparatus according to any one of Additional Remarks 3 to 8, in which
the pin includes
an insertion portion located at a position located in the second direction and inserted into the hole, and
a large-diameter portion located at a position shifted from the insertion portion in a direction opposite the second direction and having an outer diameter greater than an outer diameter of the insertion portion.

According to the configuration described above, the pin is configured as a stepped pin. Since the pin can thus be readily inserted into the hole, the holding member can be readily positioned with respect to the base. In addition, a situation in which the adhesive injected into the hole leaks out in the direction opposite the second direction can be suppressed.

### Additional Remark 10

The light source apparatus according to any one of Additional Remarks 1 to 9, further including:
a reflection member configured to reflect light output via the second end surface toward the second end surface; and
a first urging member configured to urge the reflection member against the second end surface,
in which the adhesive is provided at a position shifted from the first facing portion in the direction opposite the first direction.

According to the configuration described above, since the reflection member is urged against the second end surface by the first urging member, a situation in which an air layer is interposed between the second end surface and the reflection member can be suppressed, and a state in which the reflection member causes light output via the second end surface to return into the light guide can be maintained. The amount of the light output via the first end surface can thus be increased.

The urging force produced by the first urging member and acting on the reflection member also acts on the angle converter, which is in contact with the holding member. Since the adhesive is provided at a position shifted from the first facing portion in the direction opposite the first direction, a force that compresses the adhesive in the first direction continuously acts thereon. Therefore, as compared with a case where the adhesive is provided at a position shifted from the first facing portion in the first direction, the state in which the first facing portion and the second facing portion are bonded to each other, and in turn the state in which the base and the holding member are bonded to each other can be readily maintained.

### Additional Remark 11

The light source apparatus according to Additional Remark 10, further including
a second urging member configured to urge the light guide against the base along a direction perpendicular to the first direction,
in which an urging force produced by the first urging member is greater than a product of the number of the second urging member, a frictional force acting on the light guide, and an urging force produced by the second urging member.

According to the configuration described above, since the urging force in each of the first direction and the direction perpendicular to the first direction acts on the light guide, a situation in which the position of the light guide is displaced at the base can be suppressed even when the light source apparatus, for example, falls and an impact due to the falling acts on the light source apparatus.

The urging force in the first direction acting on the light guide is greater than the urging force in the direction perpendicular to the first direction and acting on the light guide. The state in which the flange of the angle converter is in contact with the contacts of the holding member can therefore be maintained.

### Additional Remark 12

The light source apparatus according to any one of Additional Remarks 1 to 11, in which
the contacts each have a curved surface that protrudes in a hemispherical shape in the direction opposite the first direction and is in contact with a surface of the flange that is a surface oriented in the first direction.

According to the configuration described above, as compared with the case where a surface of the flange that is the surface oriented in the first direction comes into surface contact with the contacts, the surface can be readily brought into contact with the contacts even when the surface intersects with the first direction.

### Additional Remark 13

The light source apparatus according to any one of Additional Remarks 1 to 12, in which
the light guide contains a phosphor configured to convert a wavelength of the light incident from the light emitter.

According to the configuration described above, the light source apparatus can output light having a wavelength different from the wavelength of the light emitted from the light emitter.

### Additional Remark 14

A projector including:
a light source apparatus according to any one of Additional Remarks 1 to 13;
a light modulator configured to modulate light output from the light source apparatus; and
a projection optical apparatus configured to project the light modulated by the light modulator.

The configuration described above can provide advantages that are the same as those provided by the light source apparatus described above.

## Claims

1. A light source apparatus comprising:
a light guide having a side surface extending in a first direction, a first end surface intersecting with the side surface and oriented in the first direction, and a second end surface intersecting with the side surface and oriented in a direction opposite the first direction;
an angle converter bonded to the first end surface and configured to convert an angle of light output via the first end surface;
a light emitter configured to emit light toward the side surface,
a holding member with which the angle converter is in contact in the first direction; and
a base at which the light guide and the holding member are disposed,
wherein the angle converter includes
a light passage portion through which light incident from the light guide passes, and
a flange which protrudes from the light passage portion in a direction intersecting with the first direction and through which the light incident from the light guide on the angle converter does not pass,
the base has a first facing portion,
the holding member has
contacts with which the flange is in contact along the first direction, and
a second facing portion facing the first facing portion in the first direction, and
the holding member is fixed to the base with an adhesive that fills a clearance provided between the first facing portion and the second facing portion.

2. The light source apparatus according to claim 1, wherein
the contacts are in contact with the flange at positions where some of the contacts sandwich an optical axis of the angle converter in a second direction perpendicular to the first direction and at positions where some of the contacts sandwich the optical axis of the angle converter in a third direction perpendicular to each of the first and second directions.

3. The light source apparatus according to claim 1, wherein
one of the base and the holding member includes a pin,
another the other of the base and the holding member has a hole into which the pin is inserted in a second direction perpendicular to the first direction,
when the base includes the pin and the holding member has the hole, the first facing portion is provided at the pin, and the second facing portion is provided at an inner surface of the hole, and
when the base has the hole and the holding member includes the pin, the first facing portion is provided at an inner surface of the hole, and the second facing portion is provided at the pin.

4. The light source apparatus according to claim 3, wherein
the base includes the pin provided with the first facing portion, and
the holding member has the hole having an inner surface provided with the second facing portion.

5. The light source apparatus according to claim 3, wherein
the multiple pins are provided is configured with multiple pins,
the hole is configured with multiple holes in correspondence with the multiple pins, and
the multiple pins are separate from each other in a third direction perpendicular to each of the first direction and the second direction.

6. The light source apparatus according to claim 3, wherein
the holding member has
a first wall protruding from a circumference of the hole in the second direction and facing the pin, and
a second wall protruding from the circumference of the hole in a direction opposite the second direction and facing the pin, and
the adhesive is provided between the first facing portion and the second facing portion and between the pin and at least one of the first wall and the second wall.

7. The light source apparatus according to claim 6, wherein
the first wall has an inclining surface that approaches the pin as extending in a direction opposite the second direction.

8. The light source apparatus according to claim 3, wherein
the holding member has a protrusion provided at the inner surface of the hole and protruding toward the pin.

9. The light source apparatus according to claim 3, wherein
the pin includes
an insertion portion located at a position located in the second direction and inserted into the hole, and
a large-diameter portion located at a position shifted from the insertion portion in a direction opposite the second direction and having an outer diameter greater than an outer diameter of the insertion portion.

10. The light source apparatus according to claim 1, further comprising:
a reflection member configured to reflect light output via the second end surface toward the second end surface; and
a first urging member configured to urge the reflection member against the second end surface,
wherein the adhesive is provided at a position shifted from the first facing portion in the direction opposite the first direction.

11. The light source apparatus according to claim 10, further comprising
a second urging member configured to urge the light guide against the base along a direction perpendicular to the first direction,
wherein an urging force produced by the first urging member is greater than a product of the number of the second urging member, a frictional force acting on the light guide, and an urging force produced by the second urging member.

12. The light source apparatus according to claim 1, wherein
the contacts each have a curved surface that protrudes in a hemispherical shape in the direction opposite the first direction and is in contact with a surface of the flange that is a surface oriented in the first direction.

13. The light source apparatus according to claim 1, wherein
the light guide contains a phosphor configured to convert a wavelength of the light incident from the light emitter.

14. A projector comprising:
a light source apparatus according to claim 1;
a light modulator configured to modulate light output from the light source apparatus; and
a projection optical apparatus configured to project the light modulated by the light modulator.
